# EUROPÄISCHE PATENTSCHRIFT

(11) **EP 1 329 355 B1**
(45) Veröffentlichungstag und Bekanntmachung des Hinweises auf die Patenterteilung: **08.11.2006**
(21) Anmeldenummer: 03090039.3
(22) Anmeldetag: 28.05.2001
(51) Int. Cl.: B60N 2/015, B60N 2/06

(54) **Sitzmodul**
Seat module
Siège modulaire

(30) Priorität: 26.05.2000 DE 10027063
(43) Veröffentlichungstag der Anmeldung: 23.07.2003
(62) Teilanmeldung aus: 01949228.9
(73) Patentinhaber: Brose Fahrzeugteile GmbH & Co. KG, Coburg, 96450 Coburg (DE)
(72) Erfinder: Rausch, Peter, 98489 Niederfüllbach (DE); Schwerdtner, Christina, 96465 Neustadt (DE)
(74) Vertreter: Baumgärtel, Gunnar

(56) Entgegenhaltungen:
- EP-A- 0 970 844
- DE-A- 19 835 831
- US-A- 5 800 015

## Beschreibung

Die Erfindung betrifft eine Sitzmodul nach dem Oberbegriff des Anspruchs 1.

Ein derartiges Sitzmodul umfaßt mindestens einen eine Sitzfläche aufweisenden Fahrzeugsitz, eine Sitzlängsverstellung zur Einstellung der Sitzlängsposition des Fahrzeugsitzes (entsprechend einer Einstellung der Sitzposition in Fahrzeuglängs- bzw. Fahrtrichtung) sowie einen Klappmechanismus zum Verschwenken der Sitzfläche aus ihrer Gebrauchslage in eine im wesentlichen vertikale Lage. Unter der Gebrauchslage wird dabei eine Lage der Sitzfläche verstanden, in der sie geeignet ist, einen Fahrzeuginsassen aufzunehmen. D. h., die Sitzfläche ist in ihrer Gebrauchslage derart ausgerichtet, daß ein Fahrzeuginsasse sich auf die Sitzfläche setzen kann. In ihrer vertikalen Lage erstreckt sich die Sitzfläche demgegenüber im wesentlichen entlang der vertikalen Fahrzeugachse, die vom Karosserieboden senkrecht nach oben auf den Dachhimmel weist.

Ein derartiger Fahrzeugsitz ist aus der DE 198 35 831 A1 bekannt, wobei bei dem bekannten Fahrzeugsitz ein Umklappen der Sitzfläche aus der Gebrauchslage in die im wesentlichen vertikale Lage nur in einer vorderen Sitzlängsposition des Fahrzeugsitzes möglich ist, da in den anderen, hinteren Sitzlängspositionen das Umklappen der Sitzfläche zu einer Kollision mit der Schienenlängsführung führen würde.

Der Erfindung liegt das Problem zugrunde, ein Sitzmodul der eingangs genannten Art zu schaffen, mit dem eine Kollision der Sitzfläche mit weiteren Fahrzeugteilen beim Umklappen in eine im wesentlichen vertikale Lage verhindert werden kann.

Dieses Problem wird erfindungsgemäß durch die Schaffung eines Sitzmoduls mit den Merkmalen des Patentanspruchs 1 gelöst.

Danach ist vorgesehen, daß ein Teil des Klappmechanismus, mit dem die Sitzfläche in ihre im wesentlichen vertikale Lage verschwenkbar ist, mit der ersten Schiene und ein anderer Teil des Klappmechanismus mit der zweiten Schiene des die Sitzlängsverstellung bildenden Schienenpaares gekoppelt ist, wobei die beiden Teile des Klappmechanismus nur in bestimmten, vorgegebenen Sitzlängspositionen derart miteinander zusammenwirken, daß die Sitzfläche umgeklappt werden kann, so daß die Sitzfläche nur dann in die im wesentlichen vertikale Lage schwenkbar ist, wenn sich der Sitz in bestimmten, vorgebbaren Sitzlängspositionen, insbesondere in einer hinteren Sitzlängsposition, befindet.

Hierdurch soll verhindert werden, daß es beim Umklappen der Sitzfläche in eine im wesentlichen vertikale Lage zu einer Kollision mit dem Fahrzeugboden kommt, wenn die Sitzfläche in Längsrichtung in eine ungünstige, insbesondere eine vordere Position eingestellt ist.

Insbesondere kann der Klappmechanismus einen Entriegelungsmechanismus umfassen, der zum Entriegeln einer Befestigungsvorrichtung des Sitzes vor dem Verschwenken der Sitzfläche in ihre im wesentlichen vertikale Lage dient und der zu einem Teil mit der ersten Schiene und zu einem anderen Teil mit der zweiten Schiene des Schienenpaares verbunden ist. Beispielsweise kann mit der zweiten Schiene ein Betätigungselement zum Entriegeln der Befestigungsvorrichtung verbunden sein, das nur bei einer bestimmten Position der zweiten Schiene bezüglich der ersten Schiene mit dem mit der ersten Schiene verbundenen Teil des Entriegelungsmechanismus in Wirkverbindung bringbar ist, um die Befestigungsvorrichtung zu entriegeln.

Das Betätigungselement kann z. B. über einen Haken mit einem Mitnehmer des Entriegelungsmechanismus koppelbar sein, um die Befestigungsvorrichtung zu entriegeln.

Gemäß einer Weiterbildung der Erfindung umfaßt ein derartiges Sitzmodul mindestens einen Kraftfahrzeugsitz mit einem Sitzuntergestell, über das der Sitz am Boden einer Kraftfahrzeugkarosserie befestigbar ist, und eine Querführung, auf der der Sitz quer zur Sitzlängsrichtung horizontal (d.h. in y-Richtung eines Kraftfahrzeugs) verschiebbar ist. Dabei ist der Sitz bezüglich der Querführung in mindestens einer Gebrauchsposition verriegelbar. Das Sitzuntergestell kann ferner insbesondere eine Sitzlängsführung (Schienenführung) aufweisen, mittels der der Sitz in Sitzlängsrichtung (entsprechend der Fahrzeuglängs- bzw. Fahrtrichtung im eingebauten Zustand des Sitzes) verschiebbar ist.

Ein solches Sitzmodul eignet sich insbesondere zur Verwendung als Rückbank eines Kraftfahrzeugs. Es ermöglicht, daß ein oder mehrere Sitze der Rückbank auf der Querführung in unterschiedliche Positionen verschoben und dort jeweils verriegelt werden können, so daß der Stauraum des Kraftfahrzeugs entsprechend variiert werden kann. Dies gilt insbesondere, wenn sich die Rückbank des Kraftfahrzeugs aus mehreren einzelnen Fahrzeugsitzen (insbesondere zwei oder drei Fahrzeugsitzen) zusammensetzt, die einzeln aus dem Fahrzeug entnommen werden können. Der verbleibende Sitz bzw. die verbleibenden Sitze der Rückbank können dann jeweils in unterschiedliche Gebrauchspositionen verschoben werden, wodurch der Laderaum variabel gestaltet werden kann und gleichzeitig die Mitnahme von Passagieren auf der Rückbank ermöglicht wird.

Dabei ist der mindestens eine Sitz des Sitzmodules entlang der Querführung aus seiner mindestens einen Gebrauchsposition heraus in eine von der oder den Gebrauchspositionen verschiedene (speziell für das Abnehmen des Sitzes vorgesehene) Entnahmeposition verschiebbar, in der er von der Querführung abnehmbar und dadurch aus dem Kraftfahrzeug entnehmbar ist.

Diese Erfindungsvariante beruht auf der Erkenntnis, daß das Abnehmen des Fahrzeugsitzes von der Querführung und damit das Entnehmen des Sitzes aus dem Kraftfahrzeug erheblich vereinfacht werden kann, wenn der Sitz entlang der Querführung in eine Position verschiebbar ist, die speziell für ein einfaches Abnehmen des Fahrzeugsitzes von der Querführung ausgebildet ist.

In seiner mindestens einen Gebrauchsposition ist der Sitz demgegenüber vorzugsweise nicht von der Querführung abnehmbar, so in dieser Position bzw. diesen Positionen ein sichere Fixierung des Sitzes an der Querführung gewährleistet ist.

Nach einer Variante der Erfindung ist der Sitz entlang der Querführung bis zu einer Stirnseite der Querführung verschiebbar und dort durch weiteres Verschieben in Erstrekkungsrichtung der Querführung von dieser abnehmbar.

Nach einer anderen Variante der Erfindung ist der Sitz entlang der Querführung in eine Position verschiebbar, in der er winklig (d.h. schräg oder senkrecht) zur Erstrekkungsrichtung der Querführung von dieser abnehmbar ist.

In einer bevorzugten Ausführungsform weisen hierbei die Querführung und/oder mindestens ein sitzseitiges Führungselement, das verschieblich auf der Querführung lagert, einen Entnahmeabschnitt auf, der in mindestens einer Position des Sitzes bezüglich der Querführung das Abnehmen des Sitzes von der Querführung schräg oder senkrecht zu deren Erstreckungsrichtung gestattet.

Hierzu kann vorgesehen sein, daß das Führungselement die Querführung umgreift und daß der Entnahmeabschnitt durch einen Abschnitt der Querführung mit verringertem Querschnitt gebildet wird. Umgekehrt oder ergänzend kann vorgesehen sein, daß das die Querführung umgreifende Führungselement einen mit einer Entnahmeöffnung versehenen Abschnitt aufweist, so daß in einer bestimmten Position des Führungs- elementes bezüglich der Querführung dieses von der Querführung abnehmbar ist.

Vorzugsweise wirken das Führungselement und die Querführung über eine Kunststoffbeschichtung zusammen, z.B. indem das Führungselement auf seiner der Querführung zugewandten Innenseite mit einer Kunststoffbeschichtung versehen ist, so daß eine im wesentlichen klapperfreie Lagerung des Führungselementes auf der Querführung ermöglicht wird.

Gemäß einer anderen Weiterbildung der Erfindung ist die Querführung im Querschnitt als Profilteil ausgebildet, in das das mindestens eine sitzseitige Führungselement eingreift oder das von dem mindestens einen sitzseitigen Führungselement hintergriffen wird, wobei der Entnahmeabschnitt durch eine Entnahmeöffnung der Querführung gebildet wird. Alternativ kann der Entnahmeabschnitt durch einen Abschnitt des Führungselementes gebildet werden, der derartig gestaltet ist, daß er in bestimmten Relativpositionen des Führungselementes bezüglich der Querführung ein Abnehmen des Führungselementes von der Querführung gestattet.

Für eine zuverlässige, klapperfreie Lagerung stützt sich das Führungselement vorzugsweise in zwei unterschiedlichen Richtungen an der Querführung ab. Hierzu kann das Führungselement Räder oder Rollen umfassen, die sich in unterschiedlichen Richtungen an Führungsflächen der Querführung abstützen. Hierzu muß die Querführung ein geeignetes Profil aufweisen mit entsprechenden Führungsflächen, die als Stützflächen für die Räder oder Rollen dienen können.

Grundsätzlich kann die Querführung insbesondere ein Führungsrohr oder eine Führungsschiene bzw. eine Kombination aus Führungsrohr und Führungsschiene umfassen.

Zum Arretieren des Sitzes in seinen Gebrauchspositionen weist der Sitz eine Befestigungsvorrichtung, z.B. in Form von Befestigungsböcken am hinteren Sitzende, auf, über die der Sitz an der Fahrzeugkarosserie arretierbar ist. Diese Befestigungsvorrichtung kann vollkommen unabhängig von der Querführung sein, die vorzugsweise entlang des vorderen Sitzendes verläuft.

Neben einer solchen von der Querführung unabhängigen Befestigungsvorrichtung können Sicherungselemente zur Fixierung des Sitzes bezüglich der Querführung in seinen Gebrauchspositionen vorgesehen sein. Hierzu können an der Querführung Raststellen vorgesehen sein, die mit Rastelementen des Sitzes zur Fixierung des Sitzes in seinen Gebrauchspositionen zusammenwirken.

Darüber hinaus kann das Sitzmodul eine Sitzlängsverstellung aufweisen, die mindestens ein sich in Sitzlängsrichtung erstreckendes Schienenpaar umfaßt, wobei die karosserieseitige Schiene des Schienenpaares in Erstreckungsrichtung der Querführung verschieblich auf der Querführung lagert.

Ferner weist das Sitzmodul vorzugsweise eine Schwenkachse auf, um die die Sitzfläche des mindestens einen Sitzes aus ihrer Gebrauchslage in eine im wesentlichen vertikale Lage verschwenkbar ist, um hierdurch weiteren Stauraum gewinnen zu können. Bei derartigen umklappbaren Sitzen ist üblicherweise vorgesehen, daß vor dem Schwenken der Sitzfläche in ihre vertikale Lage die Sitzlehne auf die Sitzfläche geklappt wird.

Die Schwenkachse, um die die Sitzfläche in ihre im wesentlichen vertikale Lage schwenkbar ist, verläuft parallel zu der Querführung und insbesondere der entlang derselben Kante der Sitzfläche wie die Querführung. Hierbei kann die Schwenkachse sowohl mit der Querführung zusammenfallen als auch von dieser radial beabstandet sein.

Die Ausbildung der Schwenkachse unabhängig von der Querführung ist dabei deshalb besonders vorteilhaft, weil hierdurch größere Freiheit bei der Gestaltung der Querführung erzielt wird. Diese Vorteile bei der Anordnung der Schwenkachse in einem Abstand von der Querführung sind unabhängig davon gegeben, ob das Sitzmodul die in Anspruch 1 angegebene Ausgestaltung aufweist. Sie lassen sich auch bei dem aus der EP 0 970 844 A1 bekannten Sitzmodul erzielen.

In einer Ausführungsform der Erfindung ist der Sitz nur dann entlang der Querführung verschiebbar, wenn die Sitzfläche um die Schwenkachse aus ihrer Gebrauchslage heraus verschwenkt ist. Die Sitzfläche muß hierzu nicht notwendig bis in ihre im wesentlichen vertikale Lage verschwenkt sein; es ist auch denkbar, daß ein geringeres Verschwenken der Sitzfläche ausreichend ist, um das Verschieben des Sitzes zu ermöglichen. Durch eine solche Maßnahme wird sichergestellt, daß keine (unbeabsichtigte) Verschiebung des Sitzes (z.B. in einem Crashfall) entlang der Querführung erfolgt, wenn sich die Sitzfläche in ihrer im wesentlichen waagerechten Gebrauchslage befindet.

In entsprechender Weise kann vorgesehen sein, daß der Sitz nur dann von der Querführung abnehmbar ist, wenn die Sitzfläche um die Schwenkachse aus ihrer Gebrauchslage heraus verschwenkt ist. Hierbei kann es zweckmäßig sein, daß das Abnehmen des Sitzes von der Querführung ein weitergehendes Verschwenken der Sitzfläche (z.B. bis in die vertikale Position hinein) voraussetzt als das Verschieben des Sitzes.

Zur Sicherung des Sitzes nach dem Verschwenken der Sitzfläche in eine im wesentlichen vertikale Lage kann mindestens ein Verriegelungselement vorgesehen sein, das beim Verschwenken der Sitzfläche in eine im wesentlichen vertikale Lage den Sitz hinsichtlich einer Bewegung entlang der Erstreckungsrichtung der Querführung verriegelt. So kann beispielsweise der die Sitzfläche bildende Sitzabschnitt ein Verriegelungselement aufweisen, das beim Verschwenken der Sitzfläche in eine im wesentlichen vertikale Lage mit der Querführung in Eingriff tritt und dadurch den Sitz bezüglich einer Bewegung entlang der Querführung verriegelt.

Das Verriegelungselement ist vorzugsweise entgegen seiner Verriegelungsposition federnd vorbelastet, um ein Verriegeln des Sitzes durch das Verriegelungselement in anderen Lagen als der im wesentlichen vertikalen Lage zu verhindern.

Die Bewegung des Verriegelungselementes beim Verschwenken der Sitzfläche wird vorzugsweise durch ein hierfür vorgesehenes Steuerglied gesteuert.

Weitere Merkmale und Vorteile der Erfindung werden bei der nachfolgenden Beschreibung von Ausführungsbeispielen anhand der Figuren deutlich werden.

### Es zeigen:

- Fig. 1a -: einen Kraftfahrzeugsitz, der verschieblich auf einer Querführung eines Sitzmodules gelagert ist, wobei der Sitz auf der Querführung in eine Entnahmeposition verschiebbar ist, in der er nach einem Verschwenken der Sitzfläche in eine im wesentlichen vertikale Position von der Querführung abnehmbar ist;

- Fig. 1b -: einen Querschnitt durch die Querführung aus Figur 1a;

- Fig. 1c -: eine Abwandlung des Ausführungsbeispiels aus Figur 1a, wobei der Sitz in der Entnahmeposition auch ohne vorheriges Verschwenken der Sitzfläche von der Querführung abnehmbar ist;

- Fig. 2a -: eine weitere Abwandlung des Ausführungsbeispiels aus Figur 1a, wobei der Sitz ohne ein Verschwenken der Sitzfläche von der Querführung abnehmbar ist;

- Fig. 2b -: einen Querschnitt durch die Querführung des Sitzmodules aus Figur 2a;

- Fig. 3a und 3b -: weitere Beispiele für Querschnitte durch eine Querführung;

- Fig. 4 -: eine Abwandlung des Ausführungsbeispiels aus Figur 1a, wobei der Sitz zum Abnehmen von der Querführung über deren Stirnseite hinaus verschoben werden kann;

- Fig. 5a bis 5c -: drei perspektivische Ansichten einer weiteren Abwandlung des Ausführungsbeispiels aus Figur 1a, wobei die Querführung durch ein Führungsprofil gebildet wird, in das dem Sitz zugeordnete Führungselemente eingreifen;

- Fig. 5d -: eine Variante des Sitzmodules aus den Figuren 5a bis 5c, wobei die Querführung einen rohrförmigen Abschnitt aufweist;

- Fig. 6a und 6b -: ein Sitzuntergestell mit einer Sitzlängsführung, wobei das Sitzuntergestell nur in bestimmten Verstellpositionen der Sitzlängsführung in eine im wesentlichen vertikale Stellung klappbar ist;
- Fig. 6c -: eine vergrößerte Darstellung eines Ausschnittes des Sitzuntergestells aus den Figuren 6a und 6b.

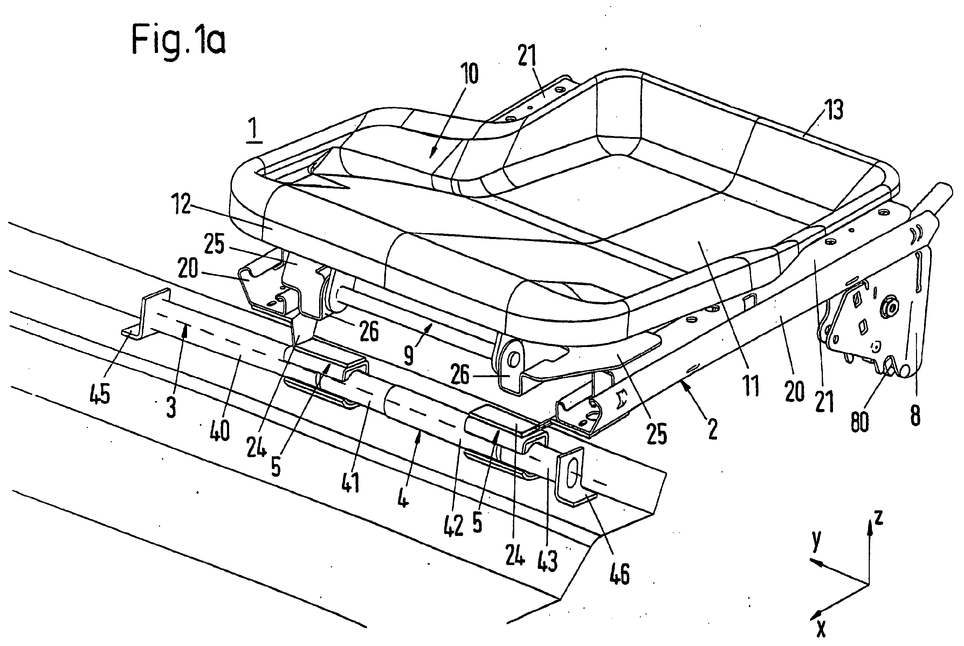

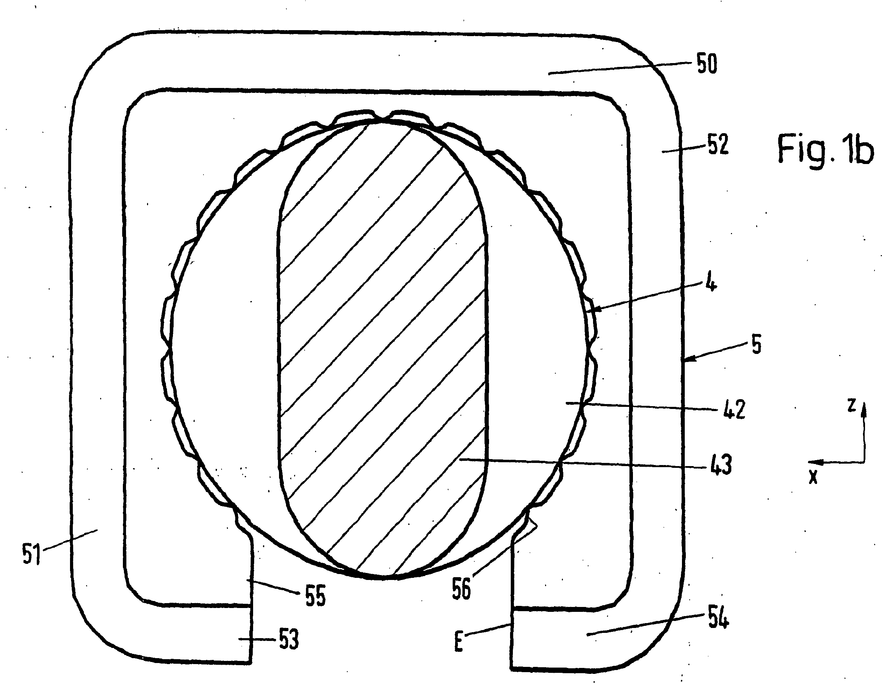

In Figur 1a sind wesentliche Teile eines Sitzmodules dargestellt, das einen horizontal sowohl in Sitzlängsrichtung x (entsprechend der Fahrzeuglängsrichtung) als auch quer dazu in y-Richtung verschiebbaren Fahrzeugsitz 1 aufweist.

Von der den Fahrzeuginsassen aufnehmenden Sitzkonstruktion ist in Figur 1a lediglich ein Sitzabschnitt 10 dargestellt, der als Sitzwanne ausgebildet ist und eine Sitzfläche 11 sowie eine vordere und eine hintere Sitzkante 12 bzw. 13 definiert. Von dieser Sitzwanne 10 wird ein Sitzpolster aufgenommen.

Die Sitzwanne 10 ist auf einer Sitzlängsverstellung gelagert, die eine aus zwei Schienenpaaren 20, 21 bestehende Sitzlängsführung (Schienenführung 2) umfaßt. Die beiden Schienenpaare 20, 21 sind beidseits der Sitzwanne 10 angeordnet und bestehen aus zwei in Sitzlängsrichtung x relativ zueinander verschiebbaren Schienen 20, 21, von denen die eine (z.B. über eine Sitzhöhenverstellung) mit der Sitzwanne 10 verbunden ist und von denen die andere mit dem Boden der Fahrzeugkarosserie verbunden wird. Die Schienenführung 2 und die Elemente, über die die Sitzwanne 10 (ggf. höhen- und neigungsverstellbar) mit der Schienenführung 2 verbunden ist, bilden ein Sitzuntergestell des Sitzes 1.

Im Bereich der Vorderkante 12 der Sitzwanne 10 ist schematisch eine Sitzneigungsverstellung 9 angedeutet, die der Einstellung der Höhe der Vorderkante 12 der Sitzwanne 10 dient und die über eine mit Haltewinkeln 26 versehene Halteplatte 25 mit den beiden sitzseitigen Schienen 21 (Oberschienen) der Schienenführung 2 verbunden ist.

Die karosserieseitigen Schienen 20 (UNterschienen) der Schienenführung 2 weisen im Bereich ihrer hinteren Enden jeweils eine Befestigungsvorrichtung in Form eines Befestigungsbocks 8 auf, der der Befestigung der karosserieseitigen Schienen 20 am Boden eines Kraftfahrzeugs dient. Hierzu sind die Befestigungsböcke 8 jeweils mit einer Ausnehmung 80 versehen, in die ein entsprechender fahrzeugbodenseitiger Befestigungsbolzen eingreifen kann.

Am vorderen Ende der beiden karosserieseitigen Schienen der Sitzlängsverstellung 2 sind jeweils Haltewinkel 24 befestigt, die Führungselemente 5 tragen, welche eine rohrförmig ausgebildeten Querführung 4 umgreifen. Die Querführung 4 erstreckt sich horizontal quer zur Sitzlängsrichtung x in y-Richtung. Sie ist an ihren beiden Stirnseiten jeweils an einem Befestigungswinkel 45 bzw. 46 festgelegt, über den sie mit dem Boden einer Fahrzeugkarosserie verbunden werden kann.

In dem Ausführungsbeispiel gemäß Figur 1a ist die Querführung 4 schematisch derart dargestellt, daß sie genau einen Fahrzeugsitz 1 aufnehmen kann. Im allgemeinen wird die Querführung 4 jedoch eine derartige Länge aufweisen, daß sie zur Aufnahme von zwei oder drei Fahrzeugsitzen geeignet ist. Diese Sitze können insbesondere die Rückbank eines Kraftfahrzeugs bilden.

Die Querführung 4 weist in Erstreckungsrichtung zwei Abschnitte 40, 42 mit einem kreisförmigen Querschnitt auf. Dabei ist jeder dieser beiden Abschnitte 40, 42 jeweils einem der Führungselemente 5 zugeordnet, die die Querführung 4 umgreifen. Der Querschnitt dieser beiden Führungsabschnitte 40, 42 ist so gewählt, daß der Sitz mittels der Führungselemente 5 auf diesen beiden Abschnitte 40, 42 der Querführung 4 in y-Richtung verschoben werden kann. Hierdurch kann der Fahrzeugsitz 1 in y-Richtung in unterschiedliche Gebrauchspositionen verschoben werden. Zur Verriegelung des Sitzes in den unterschiedlichen Gebrauchspositionen müssen dort jeweils entsprechende fahrzeugbodenseitige Befestigungsbolzen vorgesehen sein, die in die Ausnehmungen 80 der Befestigungsböcke 8 eingreifen können.

Die Führungselemente 5 umgreifen die Querführung 4 im Bereich ihrer Führungsabschnitte 40, 42 jeweils unter einem Winkel von mehr als 180°, so daß eine formschlüssige Verbindung zwischen den Führungselementen 5 und der Querführung 4 im Bereich der jeweils zugeordneten Führungsabschnitte 40, 42 besteht.

An jeden der beiden Führungsabschnitte 40, 42 der Querführung 4, auf denen die Führungselemente 5 verschiebbar sind, schließt sich jeweils ein Abschnitt 41 bzw. 43 mit einem im wesentlichen ovalen Querschnitt an. Die Querschnittsfläche dieser Entnahmeabschnitte 41, 43 ist gegenüber der Querschnittsfläche der beiden Führungsabschnitte 40, 42 verringert. Diese ermöglicht das Abnehmen des Sitzes 1 von der Querführung 4, wenn der Sitz 1 entlang der Querführung 4 in eine Position verschoben worden ist, in der die beiden sitzseitigen Führungselemente 5 die Querführung 4 jeweils im Bereich eines der Entnahmeabschnitte 41 bzw. 43 umgreifen. Voraussetzung hierfür ist allerdings, daß die Sitzwanne 10 zusammen mit der Sitzlängsführung 2 zuvor in eine im wesentlichen vertikale Lage geklappt wurde. Dies ist möglich, da die beiden Führungselemente 5 schwenkbar auf der Querführung 4 lagern.

Die Querführung 4 definiert somit zugleich eine Schwenkachse 3, um die die Sitzwanne 10 gemeinsam mit der Schienenführung 2 in eine im wesentlichen vertikale Lage klappbar ist. Selbstverständlich muß vor dem Umklappen der Sitzwanne 10 die Verbindung zwischen den Befestigungsböcken 8 und den zugeordneten karosserieseitigen Befestigungsbolzen gelöst werden.

Wenn die Sitzwanne 10 um die hierfür vorgesehene Schwenkachse 3 in eine im wesentlichen vertikale Lage geklappt worden ist und zudem die beiden Führungselemente 5 die Querführung 4 jeweils im Bereich eines der Entnahmeabschnitte 41, 43 umgreifen, dann kann anschließend der Fahrzeug sitz 1 senkrecht zur Erstreckungsrichtung der Querführung 4 nach oben (in z-Richtung) von der Querführung 4 abgenommen werden. Dies ist möglich, weil der Querschnitt der ovalen Entnahmeabschnitte 41, 43 der Querführung 4 so gewählt ist, daß die Führungselemente 5 von den Entnahmeabschnitten 41, 43 der Querführung 4 abgezogen werden können, wenn zuvor eine Schwenkbewegung der Führungselemente 5 um ca. 90° (beim Umklappen der Sitzwanne 10 in eine im wesentlichen vertikale Lage) stattgefunden hat.

Das Umklappen der Sitzwanne 10 in eine im wesentlichen vertikale Lage kann selbstverständlich auch dann erfolgen, wenn die Führungselemente 5 gerade nicht einen der Entnahmeabschnitte 41, 43, sondern einen der Führungsabschnitte 40, 42 der Querführung 4 umgreifen. In diesem Fall führt das Umklappen der Sitzwanne 10 in eine im wesentlichen vertikale Lage jedoch nicht dazu, daß der Sitz 1 von der Querführung 4 entnommen werden kann. Denn im Bereich der Führungsabschnitte 40, 42 weist die Querführung 4 einen kreisförmigen Querschnitt auf, so daß die Führungselemente 5 auch nach einer Schwenkbewegung um 90° die Führungsabschnitte 40, 42 nach wie vor formschlüssig umgreifen.

Figur 1b zeigt einen Querschnitt durch die Querführung 4 im Bereich eines der Entnahmeabschnitte 43. Es ist erkennbar, daß der Entnahmeabschnitt 43 in vertikaler Richtung (z-Richtung) die gleiche Ausdehnung aufweist, wie der dahinter angeordnete Führungsabschnitt 42 der Querführung 4, während in horizontaler Richtung (x-Richtung) die Ausdehnung des Entnahmeabschnittes 43 erheblich kleiner ist als die Ausdehnung des Führungsabschnittes 42 der Querführung 4.

Figur 1b zeigt ferner ein die Querführung 4 umgreifendes Führungselement 5, und zwar nachdem dieses Führungselement 5 um 90° in eine Position verschwenkt wurde, die einer im wesentlichen vertikalen Lage der Sitzwanne entspricht.

Das Führungselement 5 besteht aus einer Basis 50 und zwei hiervon senkrecht abstehenden Schenkeln 51, 52 mit abgewinkelten Endabschnitten 53, 54. Auf seiner der Querführung 4 zugewandten Innenseite ist das Führungselement 5 mit einer Kunststoffbeschichtung 55 versehen, die auf ihrer Oberfläche Noppen 56 aufweist, die an der Oberfläche des Führungsabschnittes 42 der Querführung 4 anliegen. Hierdurch wird eine klapperfreie Lagerung des Sitzes über die Führungselemente 5 auf der Querführung 4 ermöglicht.

Mittels der abgewinkelten Endabschnitte 53, 54 umgreift das Führungselement 5 die Querführung 4 im Bereich des Führungsabschnittes 42 unter einem Winkel von mehr als 180°, so daß eine formschlüssige Verbindung zwischen dem Führungselement 5 und dem zugehörigen Führungsabschnitt 42 besteht.

Befindet sich das Führungselement 5 jedoch auf dem Entnahmeabschnitt 43, so läßt sich dieses in vertikaler Richtung (z-Richtung) von dem Entnahmeabschnitt 43 abnehmen. Denn die Ausdehnung des Entnahmeabschnittes 43 in horizontaler Richtung (x-Richtung) ist kleiner als die Entnahmeöffnung E, die sich zwischen den beiden abgewinkelten Endabschnitten 53, 54 des Führungselementes 5 erstreckt.

Anhand Figur 1b wird ferner deutlich, daß ein Abnehmen des Führungselementes 5 von der Querführung 4 nicht möglich ist, bevor die Sitzwanne 10 (Vergleiche Figur 1a) in eine im wesentlichen vertikale Lage verschwenkt worden ist. Denn die Ausdehnung des Entnahmeabschnittes 43 in vertikaler Richtung (z-Richtung) ist größer als die Ausdehnung der Entnahmeöffnung E des Führungselementes 5 in dieser Richtung. Somit ist ein Abnehmen des Führungselementes 5 von dem Entnahmeabschnitte 43 der Querführung 4 nur dann möglich, wenn das Führungselement 5 in eine Position verschwenkt worden ist, in der das Führungselement 5 derart bezüglich des Entnahmeabschnittes 43 orientiert ist, daß sich das Führungselement in vertikaler Richtung (z-Richtung) von dem Entnahmeabschnitt 43 abnehmen läßt.

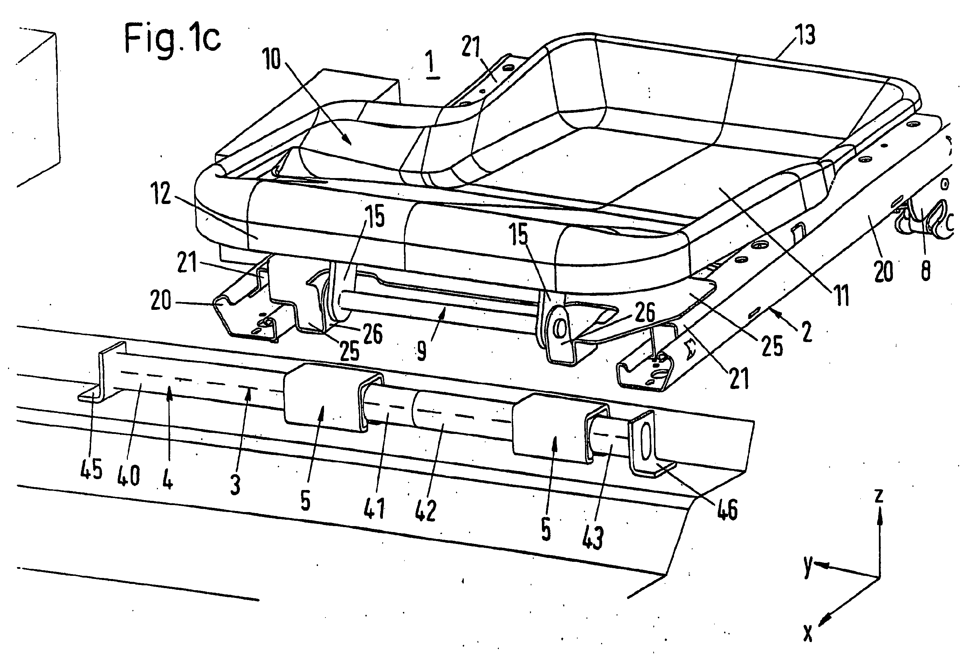

Figur 1c zeigt eine Abwandlung des Ausführungsbeispiels aus Figur 1a, wobei die Führungselemente 5, die verschieblich und verschwenkbar auf der Querführung lagern, derart orientiert sind, daß sich der Sitz 1 von der Querführung 4 abnehmen läßt, wenn sich die Führungselemente 5 auf den Entnahmeabschnitten 41, 43 befinden, ohne daß zuvor die Sitzwanne 10 in eine im Wesentlichen vertikale Lage umgeklappt worden ist. Mit anderen Worten ausgedrückt befinden sich die Führungselemente 5 in der Gebrauchslage (waagerechten Lage) der Sitzwanne 10 verglichen mit dem Ausführungsbeispiel aus Figur 1a in einer um 90° bezüglich der Querführung 4 verschwenkten Position.

Abgesehen davon, daß in Figur 1c die Verbindung zwischen den karosserieseitigen Schienen 20 der Schienenführung 2 und den Führungselementen 5 nicht näher dargestellt ist, entspricht das Ausführungsbeispiel aus Figur 1c im Übrigen dem Ausführungsbeispiel gemäß Figur 1a. Auf dieses wird daher insoweit Bezug genommen.

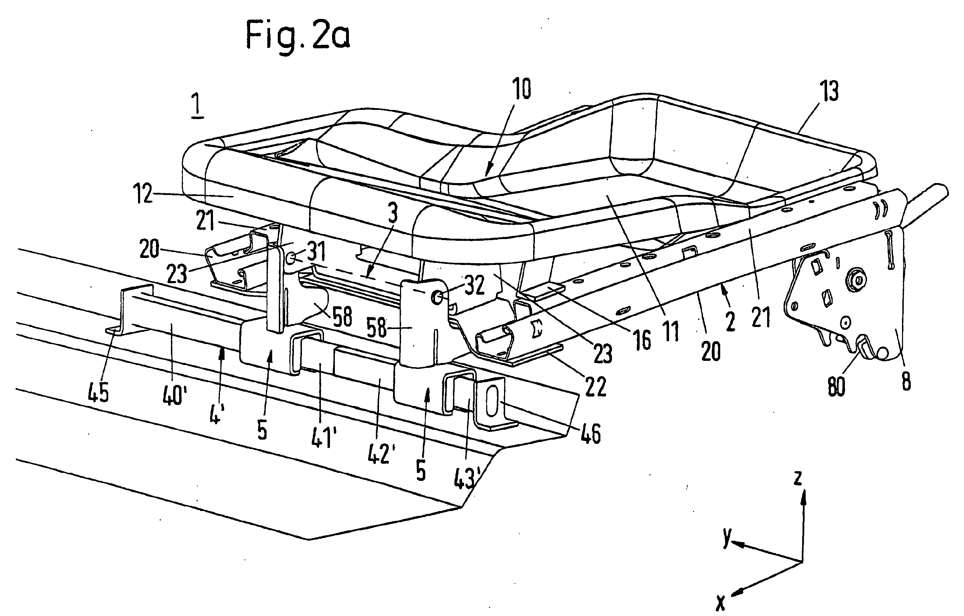

Bei dem in Figur 2a dargestellten Ausführungsbeispiel eines Sitzmodules entsprechen die Sitzwanne 10, die Schienenführung 2 sowie die Befestigungsvorrichtung 8 den entsprechenden Baugruppen aus Figur 1a. Unterschiede bestehen demgegenüber in der Ausgestaltung der Querführung 4', der zugehörigen Führungselemente 5 sowie der Schwenkachse 3, um die die Sitzwanne 10 verschwenkbar ist.

Vorliegend sind die Führungsabschnitte 40', 42' der Querführung 4' im Querschnitt im Wesentlichen halbkreisförmig ausgebildet; das heißt, die Führungsabschnitte 40', 42' weisen jeweils eine abgeplattete, ebene Oberfläche auf. Hieran angepaßt ist die Kunststoffbeschichtung 55, mit der die Führungselemente 5 auf ihrer Innenseite versehen sind, in entsprechender Weise gestaltet. Sie weist gemäß Figur 2b eine der abgeplatteten Oberfläche der Führungsabschnitte 40', 42' zugeordnete ebene innere Oberfläche 57 auf. Die Querführung 4' wird hierdurch im Bereich ihrer Führungsabschnitte 40', 42' derart von den Führungselementen 5 umgriffen, daß hier kein Verschwenken der Führungselemente 5 um die Querführung 4' möglich ist.

Dies gilt auch im Bereich der oval ausgebildeten Entnahmeabschnitte 41', 43'. Denn wenn sich die Führungselemente 5 auf den oval ausgebildeten Entnahmeabschnitten 41', 43' befinden, dann liegt auch hier die ebene innere Oberfläche 57 der Kunststoffbeschichtung 55 derart an einer Seitenfläche des entsprechenden Ovales an, daß kein Verdrehen der Führungselemente 5 bezüglich der Querführung 4' möglich ist.

Im Übrigen sind hier wie bei dem Ausführungsbeispiel gemäß Figur 1c die Querführung 4' und die zugehörigen Führungselemente 5 derart ausgestaltet und angeordnet, daß sich die Führungselemente 5 und damit der gesamte Sitz 1 von der Querführung 4' abnehmen lassen, wenn sich die Sitzwanne 10 in ihrer im Wesentlichen waagerechten Gebrauchslage befindet.

Ein weiterer Unterschied zu dem Ausführungsbeispiel gemäß Figur 1c besteht darin, daß vorliegend die Sitzwanne 10 nicht um eine durch die Querführung 4' definierte Achse, sondern um eine separate Schwenkachse 3 verschwenkbar und dadurch in eine im Wesentlichen vertikale Lage klappbar ist. Hierzu stehen von den beiden Führungselementen 5 jeweils senkrecht nach oben (in z-Richtung) Lagerböcke 58 ab, welche Bolzen 31, 32 aufnehmen, die eine Schwenkachse 3 für die Sitzwanne 10 definieren. Auf den beiden Lagerbolzen 31, 32 ist jeweils ein abgewinkelter Abschnitt 23 eines Blechteiles verschwenkbar gelagert, das wiederum an einem mit den karosserieseitigen Schienen 20 der Sitzlängsführung 2 verbundenen Halteblech 22 befestigt ist. Hierdurch ist die gesamte Anordnung bestehend aus der Sitzwanne 10 und der Schienenführung 2 um die durch die Bolzen 31, 32 definierte Achse 3 verschwenkbar.

Zusammenfassend ist bei dem Ausführungsbeispiel gemäß Figur 2a die Schwenkachse 3 unabhängig von der Querführung 4'; sie verläuft jedoch parallel zu dieser im Bereich der vorderen Sitzkante 12.

In Figur 2a ist ferner ein von der sitzseitigen Schiene 21 eines Schienenpaares 20, 21 der Schienenführung 2 nach oben abstehender Haltewinkel 16 erkennbar. Dieser dient zur Herstellung einer Verbindung zwischen der sitzseitigen Schiene 21 und der Sitzwanne 10. Die Verbindung erfolgt vorzugsweise höhenverstellbar über geeignete Hebel.

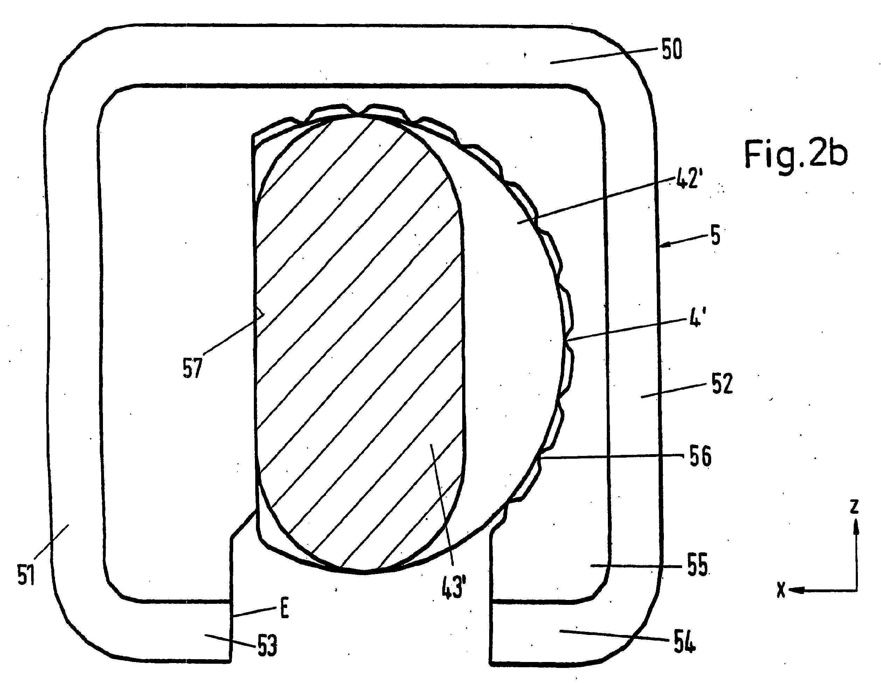

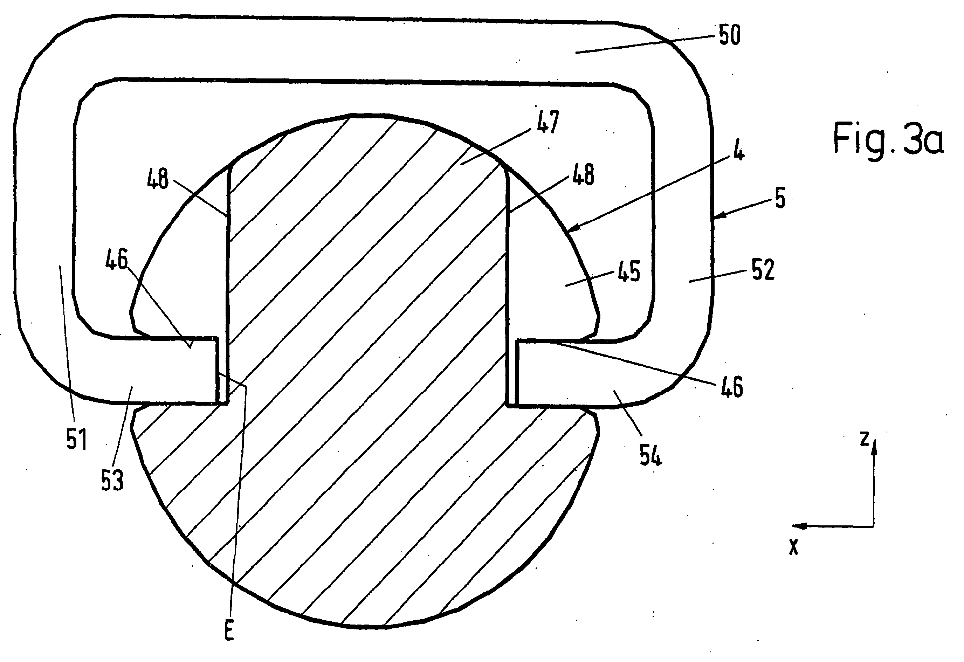

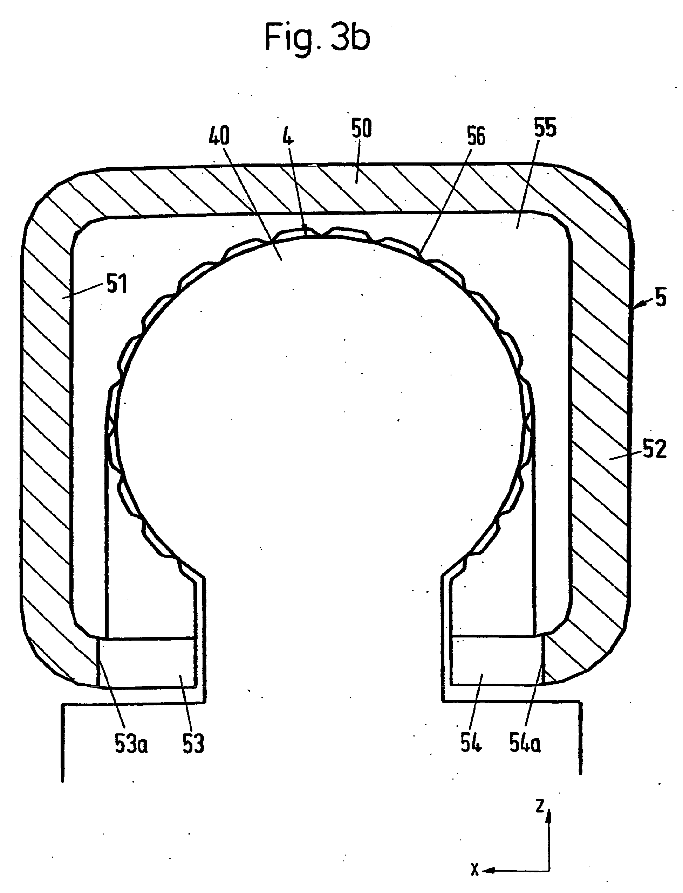

In den Figuren 3a und 3b sind zwei weitere Querschnitte durch eine Querführung 4 gezeigt.

Bei dem Ausführungsbeispiel gemäß Figur 3a ist die Querführung 4 im Querschnitt im Wesentlichen kreisförmig und weist zwei Führungsschlitze 46 auf, die sich in Erstreckungsrichtung y der Querführung 4 erstrecken und in die die Führungselemente 5 mit ihren abgewinkelten Enden 53, 54 eingreifen können. Die Führungsschlitze 46 sind jedoch nur in den Führungsabschnitten 45 der Querführung 4 vorgesehen. Daneben gibt es wiederum - wie auch bei den vorhergehenden Ausführungsbeispielen - Entnahmeabschnitte 47, die einen geqenüber den Führungsabschnitten 45 verminderten Querschnitt aufweisen. Vorliegend ist im Bereich des Entnahmeabschnittes 47 ein Freischnitt gebildet, so daß sich beidseits des Entnahmeabschnittes 47 zwei Begrenzungswände 48 senkrecht (in z-Richtung) erstrecken. Der Abstand zwischen den beiden seitlichen Begrenzungswänden 48 ist kleiner als der Abstand zwischen den beiden Endabschnitten 53, 54 des Führungselementes 5, so daß sich das Führungselement mittels der Entnahmeöffnung E von der Querführung 4 abnehmen läßt, wenn sich das Führungselement 5 auf dem Entnahmeabschnitt 47 der Querführung 4 befindet.

Bei dem Ausführungsbeispiel gemäß Figur 3b weisen die Führungselemente 5 selbst die Entnahmeabschnitte auf, die ein Abnehmen der Führungselemente und damit des gesamten Sitzes von der Querführung 4 ermöglichen sollen. Die Entnahmeabschnitte werden vorliegend dadurch gebildet, daß die abgewinkelten Endabschnitte 53, 54 der Führungselemente 5 bereichsweise verkürzt sind. In diesen Bereichen ist der Abstand zwischen den Begrenzungswänden 53a, 54a der abgewinkelten Endabschnitte in Sitzlängsrichtung x kleiner als die Ausdehnung des Grundkörpers 40 der Querführung 4 in dieser Richtung. Daher lassen sich die Führungselemente 5 von der Querführung 4 abnehmen, wenn sie in eine Position auf der Querführung 4 verschoben worden sind, in der sie nur noch über ihre Entnahmeabschnitte mit der Querführung 4 in Kontakt stehen.

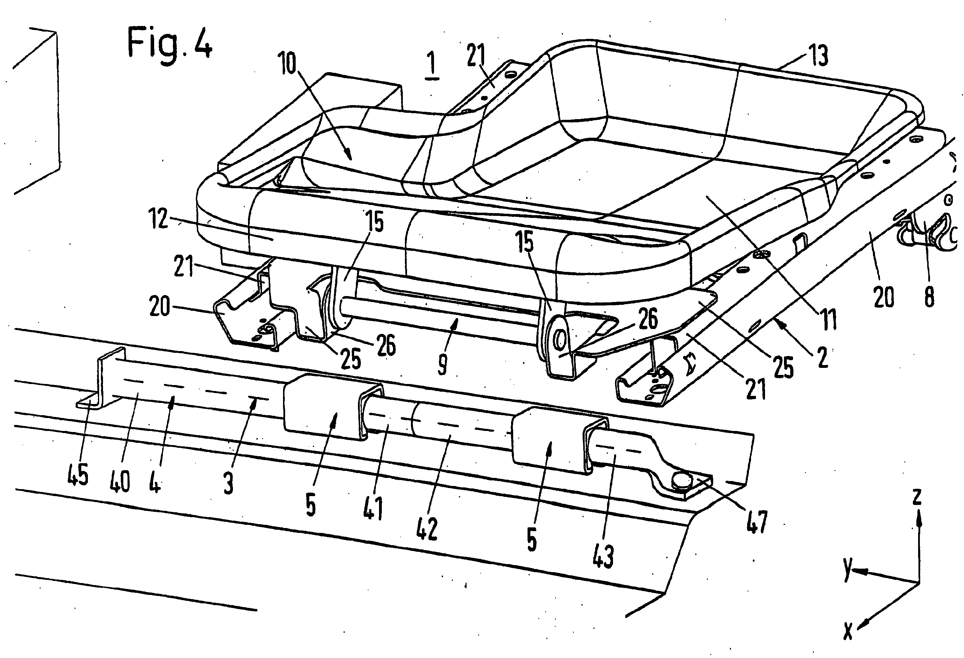

In Figur 4 ist ein Ausführungsbeispiel eines Sitzmodules dargestellt, das im Wesentlichen identisch mit dem Sitzmodul aus Figur 1c übereinstimmt. Der einzige Unterschied liegt in der Gestaltung einer Stirnseite der Querführung 4. Gemäß Figur 4 ist eine Stirnseite 47 der Querführung 4 abgeplattet und dadurch derart ausgebildet, daß die Führungselemente 5 durch Verschieben in y-Richtung an dieser Stirnseite 47 von der Querführung heruntergeschoben werden können. In diesem Fall erfolgt das Abnehmen der Führungselemente 5 und damit des Sitzes 1 von der Querführung 4 also nicht senkrecht zu deren Erstreckungsrichtung, sondern vielmehr in Erstreckungsrichtung y der Querführung 4. Die Führungselemente 5 werden einfach in Erstreckungsrichtung y der Querführung 4 von dieser heruntergeschoben, indem sie bis zu der abgeplatteten Stirnseite 47 der Querführung 4 verschoben werden und dort noch weiter in y-Richtung bewegt werden.

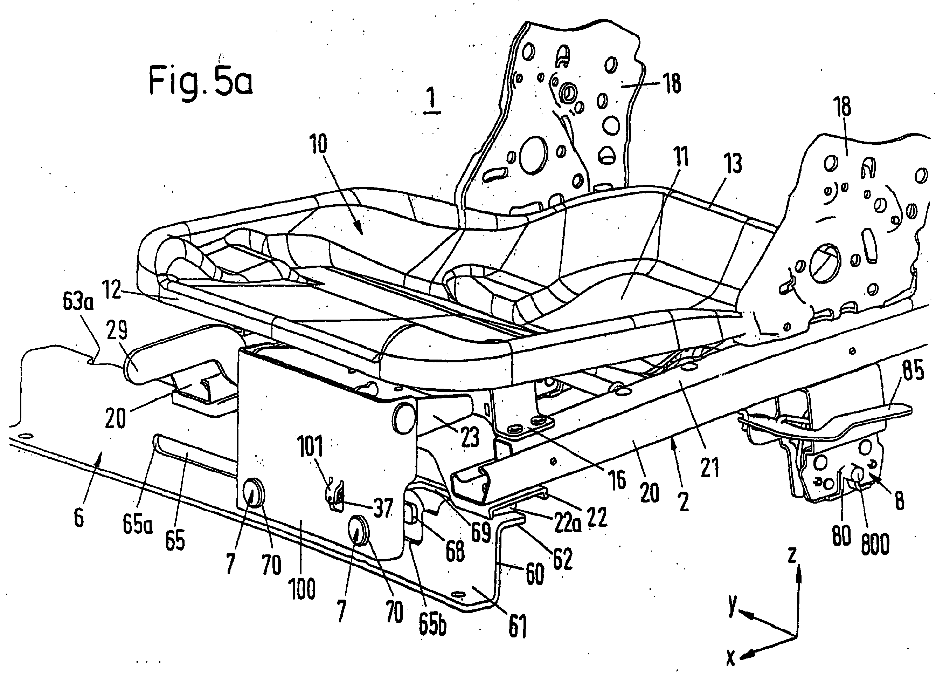

Das in den Figuren 5a bis 5c dargestellte Ausführungsbeispiel unterscheidet sich in mehrfacher Hinsicht von den vorangegangenen Ausführungsbeispielen.

So sind in den Figuren 5a bis 5c zusätzlich Beschläge 18 dargestellt, die zur schwenkbaren Aufnahme einer Rückenlehne des Sitzes 1 dienen. Vergleichbare Beschläge müssen selbstverständlich auch bei dem in den Figuren 1 bis 4 dargestellten Sitzmodulen vorgesehen sein.

Die Darstellung der Befestigungsböcke 8, die zur Befestigung der Unterschienen 20 der Schienenführung 2 am Fahrzeugboden dienen, ist ergänzt um karosseriebodenseitige Befestigungsbolzen 800, die in die Ausnehmungen 80 der Befestigungsböcke 8 eingreifen, sowie um einen Entriegelungshebel 85 zum Entriegeln der durch die Befestigungsböcke 8 gebildeten Befestigungsvorrichtung. Der Entriegelungshebel 85 ist einem der Befestigungsböcke 8 unmittelbar zugeordnet und über eine Querstange 85a mit dem anderen Befestigungsbock 8 gekoppelt.

Weiterhin ist ein Betätigungshebel 29 für die Sitzlängsverstellung dargestellt, mit dem die Schienenpaare 20, 21 der Schienenführung 2 für eine Einstellung der Sitzlängsposition freigegeben werden können.

Neben diesen Ergänzungen verglichen mit den Darstellungen aus den Figuren 1 bis 4 gibt es außerdem deutliche Unterschiede in der Gestaltung der Querführung sowie in der Gestaltung der Schwenkachse, um die die Sitzwanne 10 in eine im Wesentlichen senkrechte Position klappbar ist.

Die Querführung 6 wird vorliegend gebildet durch eine Führungsschiene mit einem im Wesentlichen S-förmigen Führungsprofil. Das Führungsprofil weist einen sich im Wesentlichen in vertikaler Richtung z erstreckenden Basisbereich 60 sowie zwei von den Enden des Basisbereiches 60 in unterschiedlicher Richtung abstehende abgewinkelte Abschnitte 61, 62 auf.

In dem Basisbereich 60 der Querführung 6 verläuft in Erstreckungsrichtung y der Querführung 6 eine Führungskulisse 65, die zur Führung sitzseitiger Führungselemente 7 entlang der Querführung 6 dient.

Sitzseitig sind zwei entlang der Erstreckungsrichtung y der Querführung 6 voneinander beabstandete Führungselemente 7 vorgesehen, die jeweils aus zwei in Sitzlängsrichtung x hintereinander angeordneten Laufrollen 71, 72 bestehen. Die beiden Laufrollen 71, 72 sind jeweils auf einem gemeinsamen Achsbolzen 70 angeordnet, der in der Führungskulisse 65 der Querführung 6 geführt ist.

Die Laufrollen 71, 72 jedes der Führungselemente 7 stützen sich jeweils in unterschiedlicher Richtung vertikal an dem Führungsprofil der Querführung 6 ab. Die vorderen Laufrollen 71 der Führungselemente 7 stützen sich jeweils nach unten (entgegen der z-Richtung) an dem einen abgewinkelten Abschnitt 61 der Querführung 6 ab. Die hinteren Laufrollen 72 stützen sich jeweils nach oben (entlang der z-Richtung) an dem anderen abgewinkelten Abschnitt 62 der Querführung 6 ab. Hierdurch wird eine klapperfreie Lagerung der Führungselemente 7 in der Querführung 6 erreicht. Gleichzeitig gewährleisten die Laufrollen 71, 72 eine reibungsarme Verschiebbarkeit der Führungselemente 7 entlang der Querführung 6.

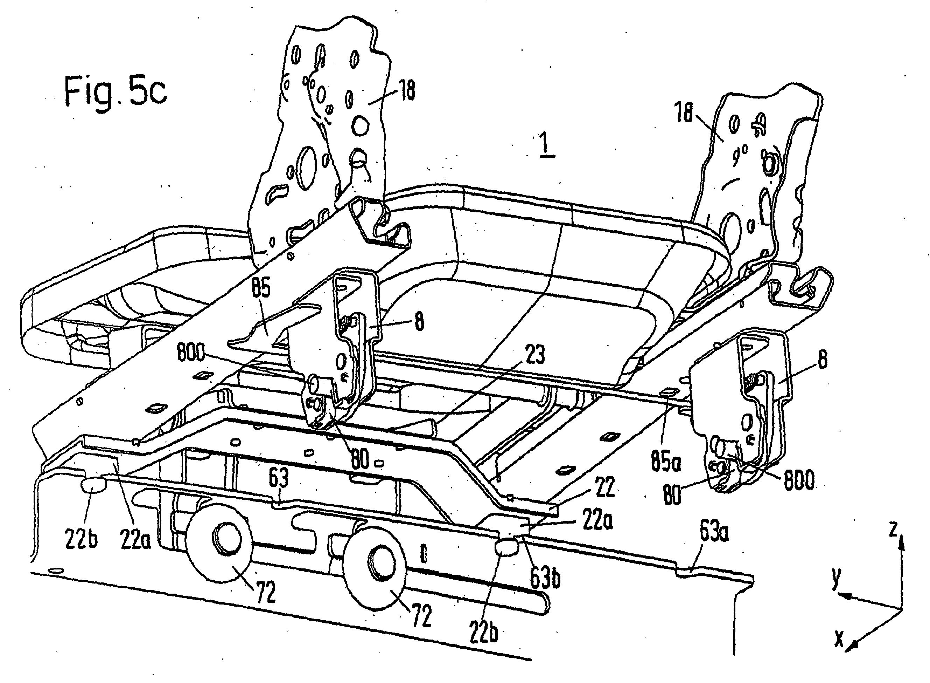

Wie insbesondere anhand der Ansicht aus Figur 5c erkennbar ist, sind in dem oberen abgewinkelten Abschnitt 62 der Querführung 6 vier in Erstreckungsrichtung der Querführung 6 voneinander beabstandete konische Aufnahmen 63a, 63b vorgesehen, denen zwei sitzseitige Fixierzapfen 22b zugeordnet sind. Die Fixierzapfen 22b stehen nach unten von jeweils einem Keil 22a ab, der an einem Halteblech 22 befestigt ist, welches sich von der einen karosserieseitigen Schiene 20 zu der anderen karosserieseitigen Schiene 20 der Schienenführung 2 erstreckt und welches mit jeder der beiden karosserieseitigen Schienen 20 verbunden ist. Die konischen Aufnahmen 63a, 63b definieren zwei Gebrauchspositionen des Sitzes 1 bezüglich der Querführung 6, wobei in jeder der beiden Gebrauchspositionen die beiden Fixierzapfen 22a in zwei konische Aufnahmen 63a bzw. 63b eingreifen und hierdurch den Sitz 1 gegen eine Verschiebung in Erstreckungsrichtung y der Querführung 6 sichern.

Zusätzlich erfolgt eine Fixierung des Sitzes 1 in der jeweiligen Gebrauchsposition mittels der Befestigungsbökke 8 im Bereich des hinteren Endes der karosserieseitigen Führungsschienen 20. Hierzu müssen am Karosserieboden Befestigungsbolzen 800 derart angeordnet sein, daß in jeder der beiden Gebrauchspositionen die hierfür vorgesehene Aufnahmen 80 der Befestigungsböcke 8 jeweils einen Befestigungsbolzen 800 aufnehmen können.

Aufgrund der Fixierung des Sitzes 1 bezüglich der Querführung 6 nicht nur über die Befestigungsböcke 8, sondern zusätzlich über die Fixierzapfen 22a, die in konische Aufnahmen 63a, 63b der Querführung 6 eingreifen, kann eine Verschiebung des Sitzes 1 entlang der Querführung 6 von einer Gebrauchsposition in eine andere nur erfolgen, wenn gleichzeitig die durch die Befestigungsböcke 8 gebildete Befestigungsvorrichtung mittels des hierfür vorgesehenen Entriegelungshebels 85 entriegelt worden ist und die Fixierzapfen 22b sich außer Eingriff mit den konischen Aufnahmen 63a, 63b befinden. Um die Fixierzapfen 22b außer Eingriff mit den konischen Aufnahmen 63a, 63b zu bringen, muß der Sitz 1 (also z.B. die Sitzwanne 10 und die Schienenführung 2) um eine hierfür vorgesehene Schwenkachse 3 verschwenkt werden. Zum Vorbereiten des Verschwenkens ist zum einen die durch die Befestigungsböcke 8 gebildete Befestigungsvorrichtung zu entriegeln, und zum anderen wird (die in den Figuren 5a bis 5c nicht dargestellte) Rückenlehne in Richtung auf die Sitzfläche 11 der Sitzwanne 10 geklappt. Anschließend kann die Sitzwanne 10 zusammen mit der Schienenführung 2 um die Schwenkachse 3 herum in Richtung auf eine im Wesentlichen vertikale Lage geklappt werden.

Die Schwenkachse 3 wird gebildet durch ein Querrohr 30, das mit seinen Enden in abgewinkelten Abschnitten 23 gelagert ist, die an dem Halteblech 22 befestigt sind und von diesem nach oben abstehen.

Auf dem die Schwenkachse 3 bildenden Querrohr 30 ist schwenkbar ein mit einem Haken 36 versehenes Verriegelungselement 35 gelagert, das beim Verschwenken der Sitzwanne 10 in eine vertikale Lage mittels eines mit der Sitzwanne 10 gekoppelten Steuergliedes 38 entgegen der Vorspannung eines Federelementes 37 in Eingriff mit einem hierfür vorgesehenen Schlitz 64a, 64b in dem Basisbereich 60 der Querführung 6 tritt. In dem Basisbereich 60 der Querführung 6 sind dabei zwei in Erstreckungsrichtung y der Querführung 6 voneinander beabstandete Schlitze 64a, 64b vorgesehen, die jeweils einer der beiden Gebrauchspositionen des Sitzes 1 bezüglich der Querführung 6 zugeordnet sind. Das heißt, das Verriegelungselement 35 greift mit seinem Verriegelungshaken 36 jeweils in einen der beiden Schlitze 64a, 64b ein, wenn die Sitzwanne 10 aus einer Gebrauchsposition des Sitzes 1 heraus in eine vertikale Lage verschwenkt wird.

Wird demgegenüber die Sitzwanne 10 nicht vollständig in ihre vertikale Lage geklappt, sondern nur in eine diagonale Lage angehoben, z.B. durch Verschwenken um die Schwenk achse 3 um einen Winkel zwischen 15° und 75°, so geraten zwar die Fixierzapfen 22b außer Eingriff mit den zugeordneten konischen Aufnahmen 63a, 63b; es findet jedoch noch kein Eingriff des Verriegelungshakens 36 in einen der Schlitze 64a, 64b statt. Hierzu wird die gesamte Anordnung derart ausgelegt, daß erst bei einem Verschwenken der Sitzwanne 10 in eine im Wesentlichen vertikale Lage, z.B. um mindestens 75°, die Wirkung des Federelementes 37 soweit überwunden ist, daß der Verriegelungshaken 36 in den zugeordneten Schlitz 64a bzw. 64b eingreifen kann.

Befindet sich also die Sitzwanne 10 nach einem Verschwenken um die Achse 3 in einer diagonalen Lage, so sind einerseits die Fixierzapfen 22b außer Eingriff mit den konischen Aufnahmen 63a, 63b und andererseits ist der Verriegelungshaken 36 noch nicht in Eingriff mit den Schlitzen 64a, 64b. In diesem Zustand kann der Sitz 1 bezüglich der Querführung 6 entlang deren Erstreckungsrichtung y verschoben werden. Hierbei gleiten die Laufrollen 71, 72 auf dem Führungsprofil der Querführung 6 und die Achsbolzen 70 der Führungselemente 7 werden in dem Führungsschlitz 65 der Querführung 6 geführt.

Durch das Verschieben des Sitzes 1 entlang der Querführung 6 kann dieser nicht nur von der einen Gebrauchsposition in die andere verschoben werden, sondern er kann auch in eine Entnahmeposition gebracht werden, in der die Führungselemente 7 von der Querführung 6 abgenommen werden können. Die Entnahmeposition auf der Querführung 6 wird gebildet durch zwei in Erstreckungsrichtung y der Querführung 6 voneinander beabstandete Entnahmeschlitze 66, 68 in dem Basisbereich 60 der Querführung 6 sowie durch zwei oberhalb der Schlitze 66, 68 vorgesehene Entnahmeöffnungen 67, 69 in dem oberen abgewinkelten Abschnitt 62 der Querführung 6. Die Entnahmeschlitze 66, 68 dienen zum Ausfädeln der Achs bolzen 70 und die Entnahmeöffnungen 67, 69 zum Entnehmen der hinteren Laufrollen 72 der Führungselemente 7. Hierdurch können die hinteren Laufrollen 72, die außerhalb der Entnahmeposition den oberen abgewinkelten Abschnitt 62 der Querführung 6 hintergreifen, durch die Entnahmeöffnungen 67, 69 hindurch vertikal nach oben (in z-Richtung) außer Eingriff mit der Querführung 6 gebracht werden.

Das Auffinden der Entnahmeposition wird erleichtert durch einen seitlichen Endanschlag 65b der Führungskulisse 65. Der Sitz 1 befindet sich nämlich in einer Entnahmeposition, wenn der Achsbolzen 70 des einen Führungselementes 7 an diesem seitlichen Anschlag 65b anliegt. Der andere seitliche Endanschlag der Führungskulisse 65 entspricht demgegenüber einer der beiden Gebrauchspositionen des Sitzes 1.

Wenn der Sitz nach einem Verschwenken der Sitzwanne 10 in eine schräge (diagonale) Lage nicht in die Entnahmeposition, sondern von einer Gebrauchsposition in die andere Gebrauchsposition überführt wurde, dann wird der Sitz nach dem Auffinden der anderen Gebrauchsposition wieder in seine Gebrauchslage (im Wesentlichen waagerechte Lage der Sitzwanne 10) geklappt, wobei die Fixierzapfen 22b in die entsprechenden konischen Aufnahmen 63a bzw. 63b eingreifen. Die Keile 22a, an denen die Fixierzapfen 22b befestigt sind, schieben sich dabei zwischen den oberen abgewinkelten Abschnitt 62 der Querführung 6 und das Verbindungsblech 22, wodurch eine klapperfreie Lagerung der Schienenführung 2 auf der Querführung 6 gewährleistet wird.

Anhand der Figuren 5a und 5c wird ferner deutlich, daß auf der Vorderseite der Querführung 6 eine Abdeck- bzw. Basisplatte 100 vorgesehen ist. Diese dient einerseits der Aufnahme der Achsbolzen 70 der Führungselemente 7. Andererseits weist sie einen Lagerabschnitt 101 zur Lagerung des Federelementes 37 auf, welches das Verriegelungselement 35 entgegen der Verriegelungsposition vorspannt. Hierdurch wird gewährleistet, daß der Verriegelungshaken 36 des Verriegelungselementes 35 nur dann in einen der Schlitze 64a, 64b eingreifen kann, wenn die Sitzwanne 10 in einer ihrer beiden Gebrauchspositionen aus der im Wesentlichen waagerechten Gebrauchslage in eine im Wesentlichen senkrechte Lage geklappt worden ist.

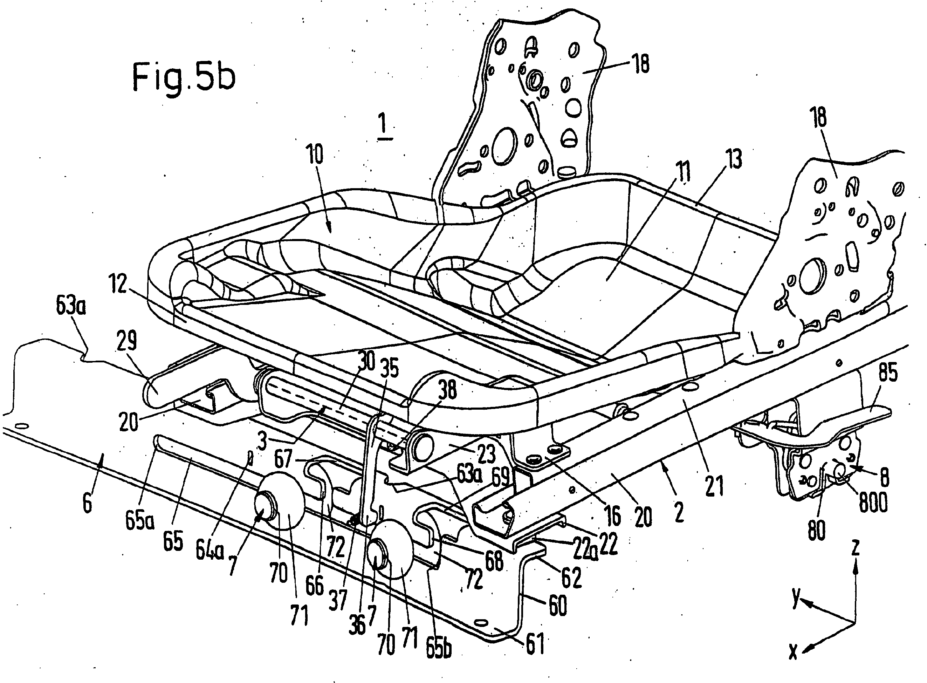

Die Abdeckplatte 100, die in Figur 5b nicht mit dargestellt ist, ist an dem Querrohr 30 befestigt, das die Schwenkachse 3 für den Sitz 1 bildet.

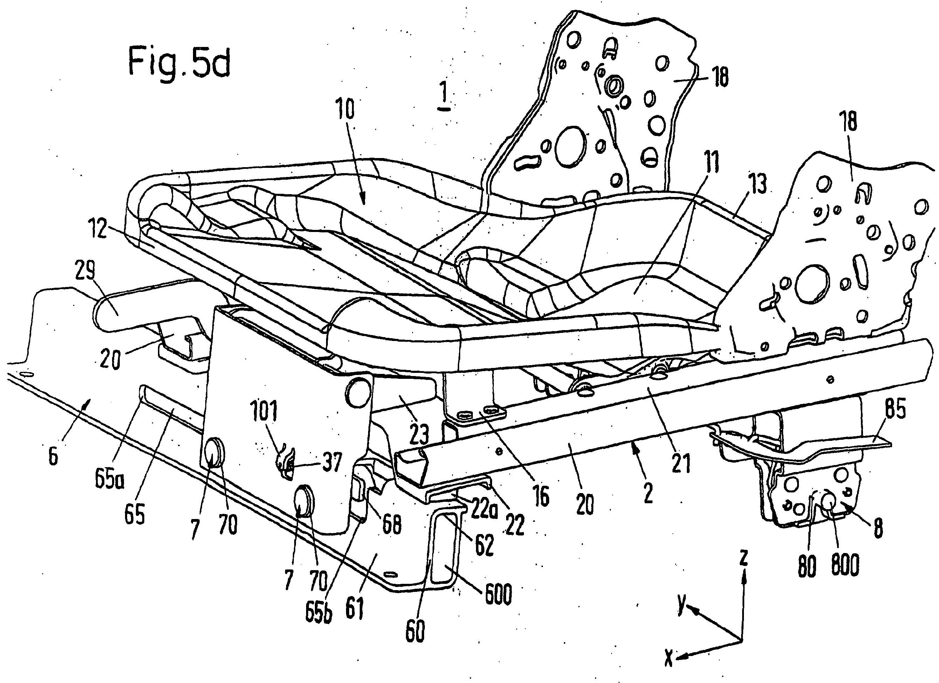

In Figur 5d ist eine Weiterentwicklung des Ausführungsbeispiels aus den Figuren 5a bis 5c dargestellt. Der einzige Unterschied besteht darin, daß hier die Querführung 6 zur Führung der hinteren Laufrollen 72 der Führungselemente 7 ein Führungsrohr 600 aufweist, dessen Begrenzungswände einerseits durch den Basisbereich 60 und den oberen abgewinkelten Abschnitt 62 der Querführung 6 und außerdem durch zwei zusätzliche Seitenwände gebildet werden.

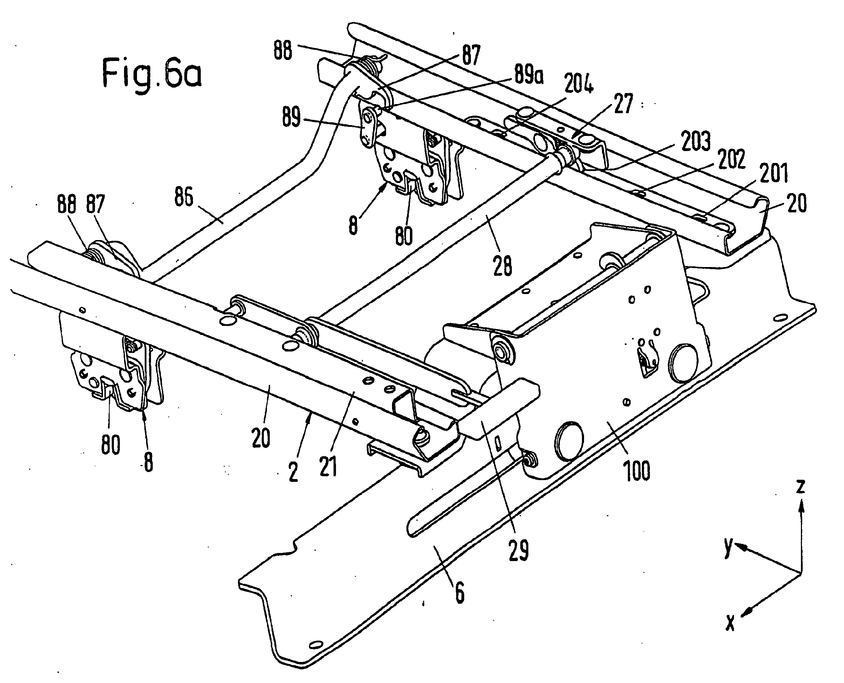

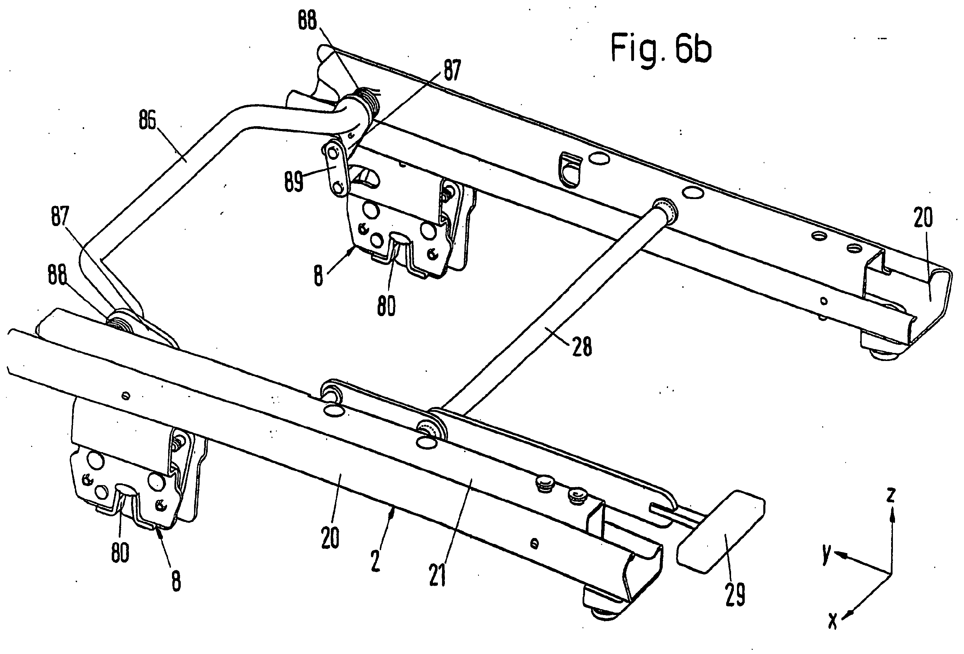

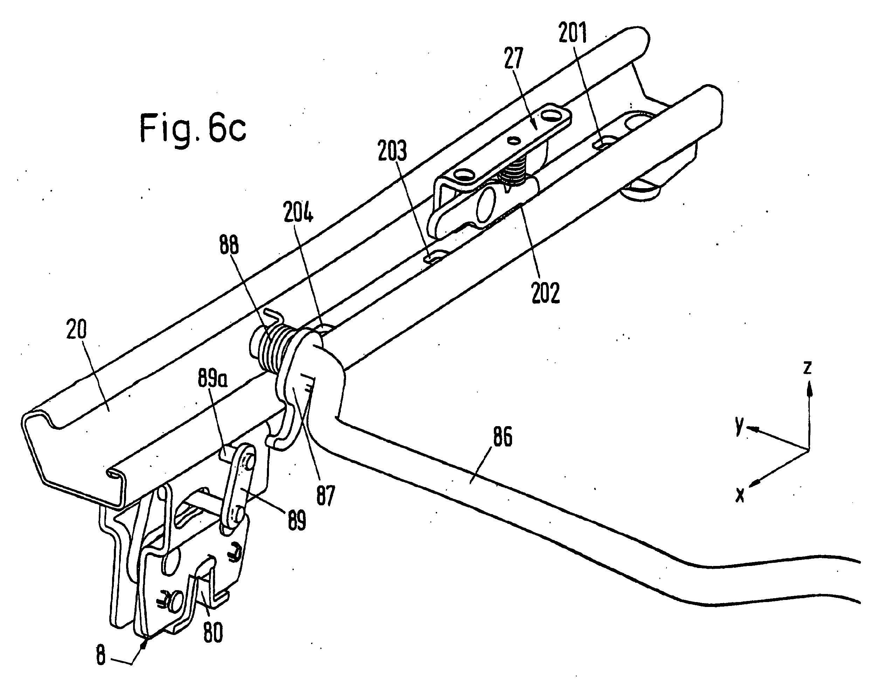

In den Figuren 6a bis 6c ist die Gestaltung der Schienenführung 2 und insbesondere deren Kopplung an die aus Befestigungsböcken 8 bestehende Befestigungsvorrichtung dargestellt, über die die karosserieseitigen Schienen 20 der Schienenführung 2 mit dem Fahrzeugboden verbindbar sind.

In den Figuren 6a bis 6c ist die Sitzlängsverstellung in größerem Detail dargestellt als in den vorhergehenden Figuren. Die Sitzlängsverstellung umfaßt neben den beiden parallel zueinander angeordneten Schienenpaaren 20, 21, die eine Schienenführung 2 bilden, insbesondere eine Verriegelungsvorrichtung 27 zum Verriegeln der Schienen 20, 21 in unterschiedlichen Sitzlängspositionen. Hierzu ist die Verriegelungsvorrichtung 27 mit einer der sitzseitigen Schienen 21 (Oberschienen) verbunden und weist in bekannter Weise einen oder mehrere Sperrzähne auf, die in entsprechende Rastöffnungen 201, 202, 203 oder 204 der karosserieseitigen Schiene 20 (Unterschiene) eingreifen können. Hierdurch wird die sitzseitige Schiene 21 bezüglich der karosserieseitigen Schiene 20 verriegelt. Ein derartiger Verriegelungsmechanismus 27 mit zugeordneten Rastöffnungen 201 bis 204 ist üblicherweise nicht nur einem der Schienenpaare 20, 21, sondern jedem der beiden Schienenpaare 20, 21 zugeordnet, um eine zuverlässige Verriegelung zu erreichen. Die beiden Verriegelungsmechanismen 27 sind über eine Verbindungswelle 28 miteinander gekoppelt und gemeinsam über einen drehfest auf der Verbindungswelle 28 gelagerten Betätigungshebel 29 entriegelbar.

Im Bereich des hinteren Endes jeder der beiden karosserieseitigen Schienen 20 der Schienenführung 2 ist jeweils ein Befestigungsbock 8 vorgesehen, über den die entsprechende karosserieseitige Schiene 20 mit dem Boden der Fahrzeugkarosserie verbindbar ist. Hierzu weisen die Befestigungsböcke 8 jeweils eine Aufnahme 80 auf, in die ein karosserieseitiger Befestigungsbolzen eingreifen kann.

Zur Entriegelung der Befestigungsvorrichtung ist ein Entriegelungshebel 86 vorgesehen, der an den beiden sitzseitigen Schienen 21 der Schienenführung 2 schwenkbar gelagert ist und mittels zweier im Bereich seiner Enden angeordneter Federelemente 88 entgegen der Entriegelungsposition vorgespannt ist, in der der Betätigungshebel 86 die Entriegelung der Befestigungsvorrichtung bewirkt.

Der Betätigungshebel 86 ist zur Entriegelung der Befestigungsvorrichtung über zwei im Bereich seiner Enden drehfest angeordneter Mitnehmerhaken 87 mit den Befestigungsböcken 8 koppelbar. Hierzu weist jeder der beiden Befestigungsbökke 8 einen Mitnehmer 89 mit einem Mitnehmerbolzen 89a auf, den der jeweils zugeordnete Mitnehmerhaken 87 des Betätigungshebels 86 umgreifen kann, so daß bei einem Verschwenken des Betätigungshebels 86 über die Mitnehmerhaken 87 und den jeweils zugeordneten Mitnehmer 89 die Befestigungsvorrichtung entriegelt werden kann. Das heißt, der entsprechende karosseriebodenseitige Befestigungsbolzen wird in der jeweils zugeordneten Aufnahme 80 eines Befestigungsbolzens 8 freigegeben.

Da der Betätigungshebel 86 und die zugehörigen Mitnehmerhaken 87 an den sitzseitigen Schienen 21 gelagert sind, während die Befestigungsböcke 8 mit dem jeweils zugeordneten Mitnehmer 89 an den karosserieseitigen Schienen 20 befestigt sind, ist eine Kopplung zwischen den Mitnehmerhaken 87 und den Mitnehmern 89 zur Entriegelung der Befestigungsvorrichtung nur in bestimmten Sitzlängspositionen, das heißt nur in bestimmten Positionen der sitzseitigen Schienen 21 bezüglich der karosserieseitigen Schienen 20 möglich. Vorzugsweise ist der Betätigungshebel 86 derart an den sitzseitigen Schienen 21 gelagert, daß die Mitnehmerhaken 87 nur dann mit dem jeweils zugeordneten Mitnehmer 89 in Eingriff bringbar sind, wenn sich der Sitz in einer hinteren Längsposition, insbesondere der hintersten Längsposition, befindet.

Hierdurch soll verhindert werden, daß die Befestigungsvorrichtung entriegelt und somit der Sitz umgeklappt werden kann, um die Sitzwanne in eine im Wesentlichen vertikale Lage zu bringen, wenn sich der Sitz gerade in einer der vorderen Sitzlängspositionen befindet. Denn in diesem Zustand bestünde die Gefahr, daß die Sitzwanne beim Umklappen in eine im Wesentlichen vertikale Position mit ihrer Vorderkante auf den Fahrzeugboden aufschlägt, wodurch die Gefahr einer Beschädigung der Sitzwanne und auch die Gefahr einer Verletzung der jeweiligen Bedienperson besteht. Außerdem wird der Bedienkomfort erhöht, wenn sich der Sitz nur dann umklappen läßt, wenn ein solches Umklappen (aufgrund einer geeigneten Sitzlängsposition) auch ohne weiteres möglich ist.

## Patentansprüche

1. Sitzmodul mit mindestens einem eine Sitzfläche aufweisenden Fahrzeugsitz, mit einer Sitzlängsverstellung zur Einstellung der Sitzlängsposition, die mindestens ein Paar in Sitzlängsrichtung (x) relativ zueinander verschiebbare Schienen (20, 21) umfaßt, und mit einem Klappmechanismus zum Verschwenken der Sitzfläche aus ihrer Gebrauchslage in eine im wesentlichen vertikale Lage,
**dadurch gekennzeichnet,**
**daß** zumindest ein Teil (3, 89) des Klappmechanismus (3, 86 bis 89) mit der ersten Schiene (20) und ein anderer Teil (86 bis 88) mit der zweiten Schiene (21) des Schienenpaares (20, 21) gekoppelt ist und daß die beiden Teile (3, 89 bzw. 86 bis 88) des Klappmechanismus (3, 86 bis 89) nur in bestimmten, vorgebbaren Sitzlängspositionen miteinander in Wirkverbindung bringbar sind, um die Sitzfläche (11) umklappen zu können, so daß die Sitzfläche (11) nur dann in die vertikale Lage schwenkbar ist, wenn sich der Sitz (1) in bestimmten, vorgebbaren Sitzlängspositionen befindet.

2. Sitzmodul nach Anspruch 1, **dadurch gekennzeichnet, daß** der Klappmechanismus (3, 86 bis 89) einen Entriegelungsmechanismus (86 bis 89) umfaßt, der zum Entriegeln einer Befestigungsvorrichtung (8) des Sitzes (1) vor dem Verschwenken der Sitzfläche (11) dient und der zu einem Teil mit der ersten Schiene und zu einem anderen Teil mit der zweiten Schiene des Schienenpaares (20, 21) verbunden ist.

3. Sitzmodul nach Anspruch 2, **dadurch gekennzeichnet, daß** mit der zweiten Schiene (21) ein Betätigungselement (86) zum Entriegeln der Befestigungsvorrichtung (8) verbunden ist und daß dieses Betätigungselement (86) mit einem mit der ersten Schiene (20) verbundenen Teil (89) des Entriegelungsmechanismus (86 bis 89) in Wirkverbindung bringbar ist, um die Befestigungsvorrichtung (8) zu entriegeln.

4. Sitzmodul nach Anspruch 3, **dadurch gekennzeichnet, daß** das Betätigungselement (86) über einen Haken (87) mit einem Mitnehmer (89) des Entriegelungsmechanismus (86 bis 89) in Wirkverbindung bringbar ist, um die Befestigungsvorrichtung (8) zu entriegeln.

5. Sitzmodul nach einem der Ansprüche 1 bis 4, **dadurch gekennzeichnet, daß** die Sitzfläche (11) nur dann in ihrer im wesentlichen vertikalen Lage schwenkbar ist, wenn sich der Sitz (1) in einer hinteren Sitzlängsposition befindet.

6. Sitzmodul mit mindestens einem Fahrzeugsitz, der ein Sitzuntergestell aufweist, über das der Sitz mit einer Kraftfahrzeugkarosserie verbindbar ist, und mit einer Querführung, entlang der der Sitz quer zur Sitzlängsrichtung horizontal verschiebbar ist, wobei der Sitz einerseits bezüglich der Querführung in mindestens einer Gebrauchsposition verriegelbar ist und andererseits von der Querführung abnehmbar ist, nach einem der vorhergehenden Ansprüche, **dadurch gekennzeichnet, daß** der Sitz (1) entlang der Querführung (4, 6) aus der Gebrauchsposition heraus in eine von jeder Gebrauchsposition verschiedene Entnahmeposition bewegbar ist, in der er von der Querführung (4, 6) abnehmbar ist.

7. Sitzmodul nach Anspruch 6, **dadurch gekennzeichnet, daß** der Sitz (1) in der Gebrauchsposition nicht von der Querführung (4, 6) abnehmbar ist.

8. Sitzmodul nach Anspruch 6 oder 7, **dadurch gekennzeichnet, daß** der Sitz (1) entlang der Querführung (4) bis zu einer Stirnseite (47) der Querführung (4) verschiebbar und dort durch weiteres Verschieben in Erstreckungsrichtung (y) der Querführung (4) von dieser abnehmbar ist.

9. Sitzmodul nach Anspruch 6 oder 7, **dadurch gekennzeichnet, daß** der Sitz (1) entlang der Querführung (4, 6) in eine Position verschiebbar ist, in der er schräg oder senkrecht zur Erstreckungsrichtung (y) der Querführung (4, 6) von dieser abnehmbar ist.

10. Sitzmodul nach Anspruch 9, **dadurch gekennzeichnet, daß** die Querführung (4, 6) und/oder mindestens ein sitzseitiges Führungselement (5, 7), das verschieblich auf der Querführung (4, 6) lagert, einen Entnahmeabschnitt (41, 43; 41', 43'; 53a, 54a; 66, 67, 68, 69) aufweist, der in mindestens einer Position des Sitzes (1) bezüglich der Querführung (4, 6) das Abnehmen des Sitzes (1) von der Querführung (4, 6) schräg oder senkrecht zu deren Erstreckungsrichtung (y) gestattet.

11. Sitzmodul nach Anspruch 10, **dadurch gekennzeichnet, daß** das Führungselement (5) die Querführung (4) umgreift und daß der Entnahmeabschnitt (41, 43; 41', 43') durch einen Abschnitt der Querführung (4) mit verringertem Querschnitt gebildet wird.

12. Sitzmodul nach Anspruch 11, **dadurch gekennzeichnet, daß** das Führungselement (5) und die Querführung (4) über eine Kunststoffschicht (55) zusammenwirken.

13. Sitzmodul nach Anspruch 12, **dadurch gekennzeichnet, daß** das Führungselement (5) auf seiner der Querführung (4) zugewandten Innenseite mit einer Kunststoffbeschichtung (55) versehen ist, um eine im wesentlichen klapperfreie Lagerung des Führungselementes (5) auf der Querführung (4) zu ermöglichen.

14. Sitzmodul nach Anspruch 10, **dadurch gekennzeichnet, daß** die Querführung (6) im Querschnitt als Profilteil ausgebildet ist, in das das Führungselement (7) eingreift oder das von dem Führungselement (7) hintergriffen wird und daß der Entnahmeabschnitt (66, 67, 68, 69) eine Entnahmeöffnung (67, 69) der Querführung (6) aufweist.

15. Sitzmodul nach Anspruch 14, **dadurch gekennzeichnet, daß** sich das Führungselement (7, 61, 62) an der Querführung (6) in zwei unterschiedlichen Richtungen abstützt.

16. Sitzmodul nach Anspruch 15, **dadurch gekennzeichnet, daß** das Führungselement (7) Räder oder Rollen (71, 72) umfaßt, die sich in unterschiedlichen Richtungen an den Führungsflächen (61, 62) der Querführung (6) abstützen.

17. Sitzmodul nach einem der vorhergehenden Ansprüche, **dadurch gekennzeichnet, daß** die Querführung (4, 6) ein Führungsrohr (4, 600) umfaßt.

18. Sitzmodul nach einem der vorhergehenden Ansprüche, **dadurch gekennzeichnet, daß** die Querführung (6) eine Führungsschiene (61, 62) umfaßt.

19. Sitzmodul nach einem der vorhergehenden Ansprüche, **dadurch gekennzeichnet, daß** der Sitz (1) entlang der Querführung (4, 6) in mindestens zwei unterschiedliche Gebrauchspositionen verschiebbar und dort verriegelbar ist.

20. Sitzmodul nach Anspruch 19, **dadurch gekennzeichnet, daß** der Sitz (1) eine Befestigungsvorrichtung, z.B. in Form von Befestigungsböcken (8) aufweist, über die der Sitz (1) in seinen Gebrauchspositionen an der Fahrzeugkarosserie arretierbar ist.

21. Sitzmodul nach einem der vorhergehenden Ansprüche, **dadurch gekennzeichnet, daß** Sicherungselemente (22b, 63a, 63b) zur Fixierung des Sitzes (1) bezüglich der Querführung (6) vorgesehen sind.

22. Sitzmodul nach Anspruch 21, **dadurch gekennzeichnet, daß** an der Querführung (6) Raststellen (63a, 63b) vorgesehen sind, die mit Rastelementen (22a, 22b) des Sitzes (1) zur Fixierung des Sitzes bezüglich der Querführung (6) in seinen Gebrauchspositionen zusammenwirken.

23. Sitzmodul nach einem der vorhergehenden Ansprüche, **dadurch gekennzeichnet, daß** der Sitz (1) eine Sitzlängsverstellung aufweist, die mindestens ein sich in Sitzlängsrichtung (x) erstreckendes Schienenpaar (20, 21) umfaßt, und daß die karosserieseitige Schiene (20) des Schienenpaares (20, 21) in Erstreckungsrichtung (y) der Querführung (4, 6) verschieblich auf der Querführung (4, 6) lagert.

24. Sitzmodul nach einem der vorhergehenden Ansprüche, **dadurch gekennzeichnet, daß** die Querführung (4, 6) entlang einer Kante (12), insbesondere der Vorderkante, der Sitzfläche (11) des Sitzes (1) verläuft.

25. Sitzmodul nach einem der vorhergehenden Ansprüche, **dadurch gekennzeichnet, daß** auf der Querführung (4, 6) mindestens ein weiterer Sitz verschieblich gelagert werden kann.

26. Sitzmodul nach einem der vorhergehenden Ansprüche, **dadurch gekennzeichnet, daß** eine Schwenkachse (3) vorgesehen ist, um die die Sitzfläche (11) des Sitzes (1) aus ihrer Gebrauchslage in eine im wesentlichen vertikale Lage schwenkbar ist.

27. Sitzmodul nach Anspruch 26, **dadurch gekennzeichnet, daß** die Schwenkachse (3) parallel zu der Querführung (4, 6) verläuft.

28. Sitzmodul nach Anspruch 24 und Anspruch 26 oder 27, **dadurch gekennzeichnet, daß** die Schwenkachse (3) entlang derselben Kante (12) der Sitzfläche (11) verläuft wie die Querführung (4, 6).

29. Sitzmodul nach einem der Ansprüche 26 bis 28, **dadurch gekennzeichnet, daß** die Schwenkachse (3) in einem Abstand von der Querführung (4, 6) verläuft.

30. Sitzmodul nach einem der Ansprüche 26 bis 29, **dadurch gekennzeichnet, daß** der Sitz (1) nur dann entlang der Querführung (4, 6) verschiebbar ist, wenn die Sitzfläche (11) um die Schwenkachse (3) aus ihrer Gebrauchslage heraus verschwenkt ist.

31. Sitzmodul nach einem der Ansprüche 26 bis 30, **dadurch gekennzeichnet, daß** der Sitz (1) nur dann von der Querführung (4, 6) abnehmbar ist, wenn die Sitzfläche (11) um die Schwenkachse (3) aus ihrer Gebrauchslage heraus verschwenkt ist.

32. Sitzmodul nach Anspruch 30 und 31, **dadurch gekennzeichnet, daß** der Sitz (1) nur dann entlang der Querführung (4, 6) verschiebbar ist, wenn die Sitzfläche (11) mindestens um einen ersten Winkelbetrag, z.B. 15°, um die Schwenkachse (3) aus ihrer Gebrauchslage heraus verschwenkt worden ist, und daß der Sitz (1) nur dann von der Querführung (4, 6) abnehmbar ist, wenn die Sitzfläche (11) mindestens um einen zweiten Winkelbetrag, z.B. 75°, verschwenkt worden ist.

33. Sitzmodul nach einem der Ansprüche 26 bis 32, **dadurch gekennzeichnet, daß** mindestens ein Verriegelungselement (35) vorgesehen ist, das beim Verschwenken der Sitzfläche (11) in eine im wesentlichen vertikale Lage den Sitz (1) hinsichtlich einer Bewegung entlang der Erstreckungsrichtung (y) der Querführung (6) verriegelt.

34. Sitzmodul nach der Anspruch 33, **dadurch gekennzeichnet, daß** der die Sitzfläche (11) bildende Sitzabschnitt (10) mindestens ein Verriegelungselement (35) aufweist, das beim Verschwenken der Sitzfläche (11) in eine im wesentlichen vertikale Lage mit der Querführung (6) in Eingriff tritt und dadurch den Sitz (1) hinsichtlich einer Bewegung entlang der Erstreckungsrichtung (y) der Querführung (6) verriegelt.

35. Sitzmodul nach Anspruch 33 oder 34, **dadurch gekennzeichnet, daß** das Verriegelungselement (35) entgegen seiner Verriegelungsposition federnd vorbelastet ist, um ein Verriegeln des Sitzes (1) durch das Verriegelungselement (35) in der Gebrauchslage der Sitzfläche (11) zu verhindern.

36. Sitzmodul nach einem der Ansprüche 33 bis 35, **dadurch gekennzeichnet, daß** ein Steuerglied (38) vorgesehen ist, das beim Verschwenken der Sitzfläche (11) die Bewegung des Verriegelungselementes (35) steuert.

37. Sitzmodul nach einem der Ansprüche 26 bis 36, **dadurch gekennzeichnet, daß** am Sitz (1) mindestens ein Keil (22a) vorgesehen ist, der in der Gebrauchslage der Sitzfläche (11) zwischen dem Sitz (1) und der Querführung (6) eingeklemmt ist.

## Claims

1. Seat module with at least one vehicle seat having a seat surface, with a seat longitudinal adjuster for adjusting the seat longitudinal position which comprises at least one pair of rails (20, 21) which are able to slide relative to one another in the seat longitudinal direction (x), and with a folding mechanism for pivoting the seat surface from its position of use into a substantially vertical position,
**characterised in that**
at least one part (3, 89) of the folding mechanism (3, 86 to 89) is coupled to the first rail (20) and another part (86 to 88) is coupled to the second rail (21) of the rail pair (20, 21) and that the two parts (3, 89 and 86 to 88 respectively) of the folding mechanism (3, 86 to 89) can only be brought into active connection with one another in specific predeterminable longitudinal positions of the seat, in order to be able to fold over the seat surface (11) so that the seat surface (11) can only then pivot into the vertical position when the seat (1) is located in specific predeterminable seat longitudinal positions.

2. Seat module according to claim 1, **characterised in that** the folding mechanism (3, 86 to 89) comprises an unlocking mechanism (86 to 89) which serves to unlock a fixing device (8) of the seat (1) prior to pivoting the seat surface (11) and which on the one part is connected to the first rail and on the other part is connected to the second rail of the rail pair (20, 21).

3. Seat module according to claim 2, **characterised in that** an actuating element (86) for unlocking the fixing device (8) is connected to the second rail (21) and that this actuating element (86) can be brought into active connection with a part (89) of the unlocking mechanism (86 to 89) connected to the first rail (20) in order to unlock the fixing device (8).

4. Seat module according to claim 3, **characterised in that** the actuating element (86) can be brought into active connection with a follower (89) of the unlocking mechanism (86 to 89) via a hook (87) in order to unlock the fixing device (8).

5. Seat module according to one of claims 1 to 4, **characterised in that** the seat surface (11) can only then pivot into its substantially vertical position when the seat (1) is located in a rear seat longitudinal position.

6. Seat module with at least one vehicle seat which has a seat underframe through which the seat can be connected to a motor vehicle body, and with a transverse guide along which the seat can be moved horizontally across the seat longitudinal direction whereby the seat on one side can be locked relative to the transverse guide in at least one position of use and on the other side can be removed from the transverse guide, according to one of the preceding claims, **characterised in that** the seat (1) can be moved along the transverse guide (4, 6) from the position of use into a removal position which is different from any position of use and in which it can be removed from the transverse guide (4, 6).

7. Seat module according to claim 6, **characterised in that** the seat (1) cannot be removed from the transverse guide (4, 6) in the position of use.

8. Seat module according to claim 6 or 7, **characterised in that** the seat (1) can be moved along the transverse guide (4) up to an end side (47) of the transverse guide (4) and can then be removed there from the transverse guide (4) through further displacement in the extension direction (y) of the transverse guide (4).

9. Seat module according to claim 6 or 7, **characterised in that** the seat (1) can be moved along the transverse guide (4, 6) into a position in which it can be removed from the transverse guide (4, 6) inclined or perpendicular to the extension direction (y) thereof.

10. Seat module according to claim 9, **characterised in that** the transverse guide (4, 6) and/or at least a guide element (5, 7) on the seat side mounted displaceable on the transverse guide (4, 6) has a removal section (41, 43; 41', 43'; 53a, 54a; 66, 67, 68, 69) which in at least one position of the seat (1) relative to the transverse guide (4, 6) permits the removal of the seat (1) from the transverse guide (4, 6) inclined or perpendicular to the extension direction (y) thereof.

11. Seat module according to claim 10, **characterised in that** the guide element (5) engages round the transverse guide (4) and that the removal section (41, 43; 41', 43') is formed through a section of the transverse guide (4) with reduced cross-section.

12. Seat module according to claim 11, **characterised in that** the guide element (5) and the transverse guide (4) interact through a plastics layer (55).

13. Seat module according to claim 12, **characterised in that** the guide element (5) is provided on its inside facing the transverse guide (4) with a plastics coating (55) in order to enable a substantially chatter-free bearing of the guide element (5) on the transverse guide (4).

14. Seat module according to claim 10, **characterised in that** the transverse guide (6) is designed in cross-section as a profiled part in which the guide element (7) engages or which is engaged by the guide element (7) and that the removal section (66, 67, 68, 69) has a removal opening (67, 69) of the transverse guide (6).

15. Seat module according to claim 14, **characterised in that** the guide element (7, 61, 62) is supported in two different directions on the transverse guide (6).

16. Seat module according to claim 15, **characterised in that** the guide element (7) comprises wheels or rollers (71, 72) which are supported in different directions on the guide faces (61, 62) of the transverse guide (6).

17. Seat module according to one of the preceding claims, **characterised in that** the transverse guide (4, 6) comprises a guide tube (4, 600).

18. Seat module according to one of the preceding claims, **characterised in that** the transverse guide (6) comprises a guide rail (61, 62).

19. Seat module according to one of the preceding claims, **characterised in that** the seat (1) can be displaced along the transverse guide (4, 6) into at least two different position of uses and can be locked therein.

20. Seat module according to claim 19, **characterised in that** the seat (1) has a fixing device, e.g. in the form of fixing blocks (8) through which the seat (1) can be locked in its position of uses on the vehicle body.

21. Seat module according to one of the preceding claims, **characterised in that** securing elements (22b, 63a, 63b) are providing for fixing the seat (1) relative to the transverse guide (6).

22. Seat module according to claim 21, **characterised in that** detent points (63a, 63b) are provided on the transverse guide (6) to interact with detent elements (22a, 22b) of the seat (1) for fixing the seat relative to the transverse guide (6) in its position of uses.

23. Seat module according to one of the preceding claims, **characterised in that** the seat (1) has a seat longitudinal adjuster which comprises at least one pair of rails (20, 21) extending in the seat longitudinal direction (x) and that the rail (20) on the body side of the rail pair (20, 21) is mounted displaceable on the transverse guide (4, 6) in the extension direction (y) of the transverse guide (4, 6).

24. Seat module according to one of the preceding claims, **characterised in that** the transverse guide (4, 6) runs along an edge (12), more particularly the front edge of the seat surface (11) of the seat (1).

25. Seat module according to one of the preceding claims, **characterised in that** at least one further seat can be mounted displaceable on the transverse guide (4,6).

26. Seat module according to one of the preceding claims, **characterised in that** a pivotal axis (3) is provided about which the seat surface (11) of the seat (1) can pivot out from its position of use into a substantially vertical position.

27. Seat module according to claim 26, **characterised in that** the pivotal axis (3) runs parallel to the transverse guide (4, 6).

28. Seat module according to claim 24 and claim 26 or 27, **characterised in that** the pivotal axis (3) runs along the same edge (12) of the seat surface (11) as the transverse guide (4,6).

29. Seat module according to one of claims 26 to 28, **characterised in that** the pivotal axis (3) runs at a distance from the transverse guide (4,6).

30. Seat module according to one of claims 26 to 29, **characterised in that** the seat (1) can only then be displaced along the transverse guide (4,6) when the seat surface (11) is pivoted round the pivotal axis (3) out from its position of use.

31. Seat module according to one of claims 26 to 30, **characterised in that** the seat (1) can only then be removed from the transverse guide (4,6) when the seat surface (11) is pivoted about the pivotal axis (3) out from its position of use.

32. Seat module according to claim 30 and 31, **characterised in that** the seat (1) can only then be moved along the transverse guide (4,6) when the seat surface (11) has been pivoted at least about a first angular amount, e.g. 15° about the pivotal axis (3) out from its position of use, and that the seat (1) can only then be removed from the transverse guide (4, 6) when the seat surface (11) has been pivoted at least about a second angular amount, e.g. 75°.

33. Seat module according to one of claims 26 to 32, **characterised in that** at least one locking element (35) is provided which as the seat surface (11) pivots into a substantially vertical position locks the seat (1) in respect of its movement along the extension direction (y) of the transverse guide (6).

34. Seat module according to claim 33, **characterised in that** the seat section (10) forming the seat surface (11) has at least one locking element (35) which as the seat surface (11) pivots into a substantially vertical position moves into engagement with the transverse guide (6) and thereby locks the seat (1) in respect of movement along the extension direction (y) of the transverse guide (6).

35. Seat module according to claim 33 or 34, **characterised in that** the locking element (35) is resiliently pretensioned against its locking position in order to prevent locking of the seat (1) through the locking element (35) in the position of use of the seat surface (11).

36. Seat module according to one of claims 33 to 35, **characterised in that** a control member (38) is provided which as the seat surface (11) pivots controls the movement of the locking element (35).

37. Seat module according to one of claims 26 to 36, **characterised in that** at least one wedge (22a) is provided on the seat (1) and in the position of use of the seat surface (11) is clamped between the seat (1) and the transverse guide (6).

## Revendications

1. Module de siège avec au moins un siege de véhicule comportant une surface d'assise, avec un réglage longitudinal du siège pour régler la position longitudinale du siège, qui comprend au moins une paire de rails (20, 21) déplaçables l'un par rapport à l'autre dans la direction de la longueur du siège (x), et avec un mécanisme articulé pour faire pivoter la surface d'assise de sa position d'utilisation à une position sensiblement verticale,**caractérisé en ce que**, au moins une partie (3, 89) du mécanisme articulé (3, 86 à 89) est accouplée au premier rail (20) et **en ce qu'**une autre partie (86 à 88) est accouplée au second rail (21) de la paire de rails (20, 21), et **en ce que** les deux parties (3, 89 ou 86 à 88) du mécanisme articulé (3, 86 à 89) ne peuvent être placées en liaison fonctionnelle l'une avec l'autre que dans des positions longitudinales précises du siège, pouvant être prédéfinies, pour pouvoir rabattre la surface d'assise (11), de manière à ce que la surface d'assise (11) ne puisse alors pivoter dans la position verticale que si le siège (1) se trouve dans des positions longitudinales précises du siège et pouvant être prédéfinies.

2. Module de siège selon la revendication 1, **caractérisé en ce que** le mécanisme articulé (3, 86 à 89) comprend un mécanisme de déverrouillage (86 à 89) qui sert à déverrouiller un dispositif de fixation (8) du siège (1) avant que la surface d'assise (11) pivote, et qui est relié d'une part au premier rail et d'autre part au second rail de la paire de rails (20, 21).

3. Module de siège selon la revendication 2, **caractérisé en ce qu'**un élément d'actionnement (86) est relié au second rail (21) pour déverrouiller le dispositif de fixation (8) et **en ce que** cet élément d'actionnement (86) peut être placé en liaison fonctionnelle avec une partie (89) du mécanisme de déverrouillage (86 à 89) reliée au premier rail (20), pour déverrouiller le dispositif de fixation (8).

4. Module de siège selon la revendication 3, **caractérisé en ce que** l'élément d'actionnement (86) peut être placé en liaison fonctionnelle avec un taquet d'entraînement (89) du mécanisme de déverrouillage (86 à 89) par l'intermédiaire d'un crochet (87), pour déverrouiller le dispositif de fixation (8).

5. Module de siège selon l'une des revendications 1 à 4, **caractérisé en ce que** la surface d'assise (11) n'est pivotée en position sensiblement verticale que si le siège (1) se trouve dans une position longitudinale arrière.

6. Module de siège avec au moins un siège de véhicule qui comporte un châssis de siège, par l'intermédiaire duquel le siège peut être relié à une carrosserie de véhicule, et avec un guidage transversal, le long duquel le siège peut être déplacé horizontalement, transversalement par rapport à la direction de la longueur du siège, le siège pouvant être verrouillé d'une part dans au moins une position d'utilisation par rapport au guidage transversal, et étant d'autre part démontable du guidage transversal, selon l'une des revendications précédentes, **caractérisé en ce que** le siège (1) est déplaçable le long du guidage transversal (4, 6) de la position d'utilisation à une position d'extraction différente de chaque position d'utilisation, dans laquelle il est démontable du guidage transversal (4, 6).

7. Module de siège selon la revendication 6, **caractérisé en ce que** le siège (1) n'est pas démontable du guidage transversal (4, 6) dans la position d'utilisation.

8. Module de siège selon la revendication 6 ou 7, **caractérisé en ce que** le siège (1) est déplaçable le long du guidage transversal (4) jusqu'à une face frontale (47) du guidage transversal (4) et peut alors être démonté de celui-ci par un autre déplacement dans la direction de l'extension (y) du guidage transversal (4).

9. Module de siège selon la revendication 6 ou 7, **caractérisé en ce que** le siège (1) est déplaçable le long du guidage transversal (4, 6) dans une position dans laquelle il peut être démonté du guidage transversal (4, 6) de manière oblique ou perpendiculairement par rapport à la direction de l'extension (y) de celui-ci.

10. Module de siège selon la revendication 9, **caractérisé en ce que** le guidage transversal (4, 6) et/ou au moins un élément de guidage (5, 7) du côté du siège, qui est monté de manière mobile sur le guidage transversal (4, 6), comporte une portion d'extraction (41, 43 ; 41', 43' ; 53a, 54a ; 66, 67, 68, 69) qui autorise, dans au moins une position du siège (1) par rapport au guidage transversal (4, 6), le démontage du siège (1) du guidage transversal (4, 6) de manière oblique ou perpendiculairement par rapport à sa direction d'extension (y).

11. Module de siège selon la revendication 10, **caractérisé en ce que** l'élément de guidage (5) enveloppe le guidage transversal (4) et **en ce que** la portion d'extraction (41, 43 ; 41', 43') est formée par une portion du guidage transversal (4) d'une section réduite.

12. Module de siège selon la revendication 11, **caractérisé en ce que** l'élément de guidage (5) et le guidage transversal (4) coopèrent par l'intermédiaire d'une couche en matière plastique (55).

13. Module de siège selon la revendication 12, **caractérisé en ce que** l'élément de guidage (5) est pourvu d'un revêtement en matière plastique (55) sur sa face intérieure tournée vers le guidage transversal (4), pour permettre un assemblage sensiblement sans jeu de l'élément de guidage (5) sur le guidage transversal (4).

14. Module de siège selon la revendication 10, **caractérisé en ce que** le guidage transversal (6) possède une section conçue comme une pièce profilée, dans laquelle l'élément de guidage (7) s'engage, ou qui est maintenue par l'arrière par l'élément de guidage (7), et **en ce que** la portion d'extraction (66, 67, 68, 69) comporte une ouverture d'extraction (67, 69) du guidage transversal (6).

15. Module de siège selon la revendication 14, **caractérisé en ce que** l'élément de guidage (7, 61, 62) s'appuie sur le guidage transversal (6) dans deux directions différentes.

16. Module de siège selon la revendication 15, **caractérisé en ce que** l'élément de guidage (7) comprend des roues ou des galets (71, 72), qui s'appuient dans différentes directions sur les surfaces de guidage (61, 62) du guidage transversal (6).

17. Module de siège selon l'une des revendications précédentes, **caractérisé en ce que** le guidage transversal (4, 6) comprend un tube de guidage (4, 600).

18. Module de siège selon l'une des revendications précédentes, **caractérisé en ce que** le guidage transversal (6) comprend un rail de guidage (61, 62).

19. Module de siège selon l'une des revendications précédentes, **caractérisé en ce que** le siège (1) est déplaçable le long du guidage transversal (4, 6) dans au moins deux positions d'utilisation différentes et dans lesquelles il peut être verrouillé.

20. Module de siège selon la revendication 19, **caractérisé en ce que** le siège (1) comporte un dispositif de fixation, par exemple sous la forme de pattes de fixation (8), par l'intermédiaire desquelles le siège (1) peut être bloqué dans ses positions d'utilisation sur la carrosserie du véhicule.

21. Module de siège selon l'une des revendications précédentes, **caractérisé en ce que** des éléments de blocage (22b, 63a, 63b) sont prévus pour fixer le siège (1) par rapport au guidage transversal (6).

22. Module de siège selon la revendication 21, **caractérisé en ce que** des emplacements d'enclenchement (63a, 63b) sont prévus sur le guidage transversal (6), qui coopèrent avec des éléments d'enclenchement (22a, 22b) du siège (1) afin de fixer le siège par rapport au guidage transversal (6) dans ses positions d'utilisation.

23. Module de siège selon l'une des revendications précédentes, **caractérisé en ce que** le siège (1) comporte un réglage longitudinal du siège, qui comprend au moins une paire de rails (20, 21) s'étendant dans le sens de la longueur du siège(x), et **en ce que** le rail (20) du côté de la carrosserie de la paire de rails (20, 21) est monté de manière mobile sur le guidage transversal (4, 6) dans la direction de l'extension (y) du guidage transversal (4, 6).

24. Module de siège selon l'une des revendications précédentes, **caractérisé en ce que** le guidage transversal (4, 6) s'étend le long d'un rebord (12), en particulier le rebord avant, de la surface d'assise (11) du siège (1).

25. Module de siège selon l'une des revendications précédentes, **caractérisé en ce qu'**au moins un siège supplémentaire peut être monté de manière mobile sur le guidage transversal (4, 6).

26. Module de siège selon l'une des revendications précédentes, **caractérisé en ce qu'**un axe de pivotement (3) est prévu, autour duquel la surface d'assise (11) du siège (1) peut pivoter de sa position d'utilisation dans une position sensiblement verticale.

27. Module de siège selon la revendication 26, **caractérisé en ce que** l'axe de pivotement (3) s'étend parallèlement au guidage transversal (4, 6).

28. Module de siège selon la revendication 24 et la revendication 26 ou 27, **caractérisé en ce que** l'axe de pivotement (3) s'étend le long du même rebord (12) de la surface d'assise (11) que le guidage transversal (4, 6).

29. Module de siège selon l'une des revendications 26 à 28, **caractérisé en ce que** l'axe de pivotement (3) s'étend à une distance du guidage transversal (4, 6).

30. Module de siège selon l'une des revendications 26 à 29, **caractérisé en ce que** le siège (1) n'est déplaçable le long du guidage transversal (4, 6) que si la surface d'assise (11) est pivotée hors de sa position d'utilisation autour de l'axe de pivotement (3).

31. Module de siège selon l'une des revendications 26 à 30, **caractérisé en ce que** le siège (1) n'est démontable du guidage transversal (4, 6) que si la surface d'assise (11) est pivotée hors de sa position d'utilisation autour de l'axe de pivotement (3).

32. Module de siège selon la revendication 30 et 31, **caractérisé en ce que** le siège (1) n'est déplaçable le long du guidage transversal (4, 6) que si la surface d'assise (11) a été pivotée hors de sa position d'utilisation au moins d'une première valeur d'angle, par exemple 15°, autour de l'axe de pivotement (3), et **en ce que** le siège (1) n'est démontable du guidage transversal (4, 6) que si la surface d'assise (11) a été pivotée d'une seconde valeur d'angle, par exemple 75°.

33. Module de siège selon l'une des revendications 26 à 32, **caractérisé en ce qu'**au moins un élément de verrouillage (35) est prévu, qui, lors du pivotement de la surface d'assise (11) dans une position sensiblement verticale, verrouille le siège (1) en ce qui concerne un mouvement le long de la direction de l'extension (y) du guidage transversal (6).

34. Module de siège selon la revendication 33, **caractérisé en ce que** la portion de siège (10) formant la surface d'assise (11) comporte au moins un élément de verrouillage (35) qui, lors du pivotement de la surface d'assise (11) dans une position sensiblement verticale, s'engage dans le guidage transversal (6), et verrouille de ce fait le siège (1) en ce qui concerne un mouvement le long de la direction de l'extension (y) du guidage transversal (6).

35. Module de siège selon la revendication 33 ou 34, **caractérisé en ce que** l'élément de verrouillage (35) est précontraint de manière élastique à l'inverse de sa position de verrouillage pour empêcher un verrouillage du siège (1) par l'élément de verrouillage (15) dans la position d'utilisation de la surface d'assise (11).

36. Module de siège selon l'une des revendications 33 à 35, **caractérisé en ce qu'**un organe de commande (38) est prévu, qui commande le mouvement de l'élément de verrouillage (35) lors du pivotement de la surface d'assise (11).

37. Module de siège selon l'une des revendications 26 à 36, **caractérisé en ce qu'**au moins une clavette (22a) est prévue sur le siège (1), qui est clavettée entre le siège (1) et le guidage transversal (6) dans la position d'utilisation de la surface d'assise (11).
